(19) Europäisches Patentamt / European Patent Office / Office européen des brevets

(11) EP 3 526 270 B1

(12) EUROPÄISCHE PATENTSCHRIFT

(45) Veröffentlichungstag und Bekanntmachung des Hinweises auf die Patenterteilung:
**26.05.2021 Patentblatt 2021/21**

(21) Anmeldenummer: **17780442.4**

(22) Anmeldetag: **10.10.2017**

(51) Int Cl.:
***C08G 18/79*** *(2006.01)* ***C08J 3/24*** *(2006.01)*
***C08G 18/82*** *(2006.01)* ***C08G 18/10*** *(2006.01)*
***C08G 18/24*** *(2006.01)* ***C08G 18/44*** *(2006.01)*

(86) Internationale Anmeldenummer:
**PCT/EP2017/075856**

(87) Internationale Veröffentlichungsnummer:
**WO 2018/069348 (19.04.2018 Gazette 2018/16)**

(54) **VERFAHREN ZUR HERSTELLUNG VON ELASTOMEREN**

METHOD FOR PRODUCING ELASTOMERS

PROCÉDÉ DE FABRICATION D'ÉLASTOMÈRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.10.2016 EP 16193573**

(43) Veröffentlichungstag der Anmeldung:
**21.08.2019 Patentblatt 2019/34**

(73) Patentinhaber: **Covestro Intellectual Property GmbH & Co. KG**
**51373 Leverkusen (DE)**

(72) Erfinder:
- **NORWIG, Jochen**
  **51375 Leverkusen (DE)**
- **MARKER, Volker**
  **51399 Burscheid (DE)**
- **LANGANKE, Jens**
  **53894 Mechernich (DE)**
- **WOLF, Aurel**
  **42489 Wülfrath (DE)**
- **GÜRTLER, Christoph**
  **50735 Köln (DE)**
- **WAGNER, Philipp Nicolas**
  **52066 Aachen (DE)**
- **KESSLER, Florian**
  **52074 Aachen (DE)**

(74) Vertreter: **Levpat**
**c/o Covestro AG**
**Gebäude 4825**
**51365 Leverkusen (DE)**

(56) Entgegenhaltungen:
**EP-A1- 2 845 873 US-A1- 2011 028 642**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 526 270 B1

## Beschreibung

Die vorliegende Erfindung beschreibt ein Verfahren zur Herstellung von Polyurethan-Elastomeren. Sie betrifft weiterhin durch ein solches Verfahren erhältliche Polyurethan-Elastomere, deren Verwendung sowie Zwei-Komponenten-Systeme zur Herstellung von Polyurethan-Elastomeren.

Polyurethan-Elastomere wurden vor über 60 Jahren basierend auf 1,5-Naphthalindiisocyanat (NDI; z.B. Desmodur® 15 der Fa. Covestro AG), einem langkettigen Polyesterpolyol und einem kurzkettigen Alkandiol unter dem Handelsnamen Vulkollan® der Fa. CovestroAG kommerzialisiert. Vulkollane® zeichnen sich hierbei dadurch aus, dass sie neben exzellenten mechanisch-dynamischen Eigenschaften auch hervorragend bezüglich des Dauergebrauchsverhaltens verglichen mit vielen anderen Werkstoffen abschneiden. Auch das Quellungsverhalten in vielen organischen Lösungsmitteln liegt auf einem bemerkenswert günstigen Niveau.

Als langkettige Polyole kommen bisher neben Polyesterpolyolen auch Polyetherpolyole, Polycarbonatpolyole und Polyetheresterpolyole zum Einsatz. Die Wahl des langkettigen Polyols richtet sich hauptsächlich nach den Erfordernissen der jeweiligen Anwendung. Man spricht in diesem Zusammenhang auch von "maßgeschneiderten Eigenschaften". So werden zum Beispiel Polyetherpolyole verwendet, wenn Hydrolysestabilität und Tieftemperatureigenschaften im Vordergrund stehen. Für Polyesterpolyole ergeben sich bezüglich der mechanischen Eigenschaften und UV-Stabilität gegenüber Polyetherpolyolen Vorteile. Nachteilig ist jedoch beispielsweise die geringe Mikrobenbeständigkeit. Polycarbonatpolyole kombinieren in gewisser Weise die Vorteile von Polyether- und Polyesterpolyolen. Die Vorteile der Polycarbonatpolyole liegen insbesondere in ihrer UV-Stabilität, Hydrolysestabilität insbesondere unter sauren Bedingungen und ihren mechanischen Eigenschaften.

Nachteilig an Polyester- und Polycarbonatpolyolen sowie an ihren Mischtypen, den Polyestercarbonatpolyolen, gegenüber den Polyetherpolyolen ist deren meist weniger vorteilhaftes Tieftemperaturverhalten. Dies ist strukturell bedingt und rührt von der erhöhten Polarität der Carbonylgruppen her, die normalerweise dazu führt, dass Polyester- und Polycarbonatpolyole teilkristallin sind, wohingegen Polyetherpolyole, insbesondere die Propylenoxid basierten Typen als kommerziell größte Gruppe, amorph sind.

Der Bereich der Gebrauchstemperatur wird nach oben hin durch das thermische Verhalten der Hartsegmente (z.B. Urethan-, Harnstoff-, Isocyanurat-Gruppen etc.), d.h. der Strukturelemente, die in den Polyisocyanatbausteinen vorliegen, begrenzt.

Eine weitere Stoffklasse von Polyolen, welche grundsätzlich für die Herstellung von Polyurethan-Elastomeren in Frage kommen, sind Polyethercarbonatpolyole. Die Herstellung von Polyethercarbonatpolyolen durch katalytische Umsetzung von Alkylenoxiden (Epoxiden) und Kohlendioxid in Anwesenheit von H-funktionellen Startersubstanzen ("Starter") wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei e, f und g für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Schema (I) gezeigte cyclische Carbonat (beispielsweise für R = $CH_3$ Propylencarbonat).

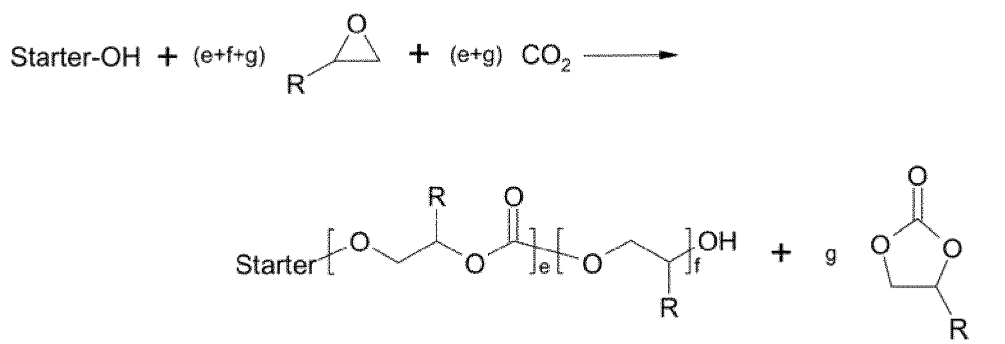

(I)

EP 2 845 872 A1 offenbart ein Verfahren zur Herstellung von Polyethercarbonatpolyolen mit Seitenketten umfassend die Schritte: (α) Vorlegen eines Katalysators und: (αα) eines Suspensionsmittels, das keine H-funktionellen Gruppen enthält und/oder (αβ) einer H-funktionellen Starterverbindung; (γ) Zudosieren von Kohlendioxid und mindestens

zweier Alkylenoxide, wobei diese Alkylenoxide von dem im Schritt (β) zudosierten Alkylenoxid oder zudosierten Alkylenoxiden gleich oder verschieden sein können, wobei die Differenz des Molekulargewichts des leichtesten und des schwersten der in der Stufe (γ) zudosierten Alkylenoxide größer oder gleich 24 g/mol beträgt und das leichteste Alkylenoxid ein C2-C4-Alkylenoxid ist und wobei weiterhin für den Fall, dass in Schritt (α) keine H-funktionelle Starterverbindung vorgelegt wurde, Schritt (γ) das Zudosieren einer H-funktionellen Starterverbindung umfasst. Beansprucht wird ferner die Verwendung des Polyethercarbonatpolyols als vernetzbare Komponente innerhalb einer Vernetzungsreaktion zur Herstellung duromerer oder elastomerer Netzwerke.

WO 2014/060329 A1 betrifft ein Verfahren zur Herstellung von Polyurethanelastomeren, wobei in einem ersten Schritt i) ein NCO-terminiertes Prepolymer aus den Komponenten aus der Gruppe bestehend aus A) mindestens einem organischen Polyisocyanat enthaltend mindestens zwei NCO-Gruppen und B) mindestens einem Polyol mit einem zahlenmittleren Molekulargewicht von 500 bis 5000 g/mol und einer Funktionalität von 2 bis 4, in Gegenwart von C) gegebenenfalls Katalysatoren und/oder D) gegebenenfalls Hilfs- und Zusatzmitteln hergestellt wird und in einem zweiten Schritt ii) das Prepolymer aus Schritt i) ausschließlich mit Komponenten aus der Gruppe bestehend aus E) einem oder mehreren Kettenverlängerern und/oder Vernetzern mit einem zahlenmittleren Molekulargewicht von 60 bis 490 g/mol, einer Funktionalität von 2 bis 3 und ausschließlich OH-Gruppen als gegenüber Isocyanat reaktive Gruppen im Molekül in Gegenwart von F) gegebenenfalls Katalysatoren und/oder G) gegebenenfalls Hilfs- und Zusatzmitteln umgesetzt wird, wobei das Molverhältnis der Summe der CO-Gruppen aus A) zu der Summe der gegenüber Isocyanaten reaktiven Gruppen aus B) und E) 0,9 : 1 bis 1,2 : 1 beträgt und die Komponente B) wenigstens ein Polyethercarbonatpolyol in einer Menge von mindestens 20 Gew.-%, bezogen auf die Komponente B), enthält, welches durch Anlagerung von Kohlendioxid und Alkylenoxiden mit drei oder vier Kohlenstoffatomen an H-funktionelle Startsubstanzen unter Verwendung von Katalysatoren erhalten wird.

Ungesättigte Polyethercarbonatpolyole sind über ihre Doppelbindungen vernetzbar. So offenbart WO 2015/032645 A1 ein Verfahren zur Herstellung Mercapto-vernetzter Polyethercarbonate, wobei Doppelbindungen enthaltende Polyethercarbonatpolyole mit polyfunktionellen Mercaptanen und/oder Schwefel unter Einwirkung von Initiatorverbindungen zur Reaktion gebracht werden.

WO 2015/032737 A1 betrifft ein Verfahren zur Herstellung von Polyethercarbonatpolyolen, wobei die Polyethercarbonatpolyole Doppelbindungen enthalten, umfassend die Schritte:

(α) Vorlegen eines Katalysators und:

(αα) eines Suspensionsmittels, das H-funktionellen Gruppen enthält
und/oder
(αβ) einer H-funktionellen Starterverbindung

(γ) Zudosieren von Kohlendioxid, eines Alkylenoxides, das keine ungesättigte Gruppe enthält, und mindestens einer ungesättigten Verbindung,

wobei die in Schritt (γ) zudosierten ungesättigte Verbindung aus der Gruppe der ungesättigten Alkylenoxide und/oder ungesättigten cyclischen Anhydride ausgewählt sind, wobei

(γ1) eine der ungesättigten Verbindungen eine Doppelbindung umfassend mindestens einen Substituenten ausgewählt aus der Gruppe $-OX^1$, $-OCOX^1$, $-X^1$, $-CH_2OX^1$ und/oder $-CH=CHX^1$ umfasst und wobei $X^1$ jeweils für substituiertes oder unsubstituiertes Alkyl, substituiertes oder unsubstituiertes Cycloalkyl, substituiertes oder unsubstituiertes Aryl oder eine substituierte oder unsubstituierte Methylenkette steht;

(γ2) und eine andere der ungesättigten Verbindungen eine Doppelbindung umfassend mindestens einen Substituenten ausgewählt aus der Gruppe -F, -Cl, -Br, -I, -COH, $-COX^2$, - $COOX^2$, $-C{\equiv}N$ und/oder $-NO_2$ umfasst oder ein ungesättigtes, substituiertes oder unsubstituiertes cyclisches Anhydrid einer organischen Dicarbonsäure ist und wobei $X^2$ jeweils für substituiertes oder unsubstituiertes Alkyl, substituiertes oder unsubstituiertes Cycloalkyl, substituiertes oder unsubstituiertes Aryl oder eine substituierte oder unsubstituierte Methylenkette steht.

In WO 2015/000903 A1 werden Polyurethan-Harz-Zusammensetzungen enthaltend Polyethercarbonatpolyole zur Herstellung von Polyurethan - Komposite aus den entsprechenden PU-Harzen offenbart, wobei organische Polyisocyanatkomponenten mit Isocyanat-reaktiven Komponenten und Schäumungsmitteln umgesetzt werden. Die Polyethercarbonatpolyole als Isocyanat-reaktiven Komponente wird hierbei durch Anlagerung von CO2 und Alkylenoxiden an H-funktionelle Starterverbindungen in Gegenwart eines Doppelmetallcyanidkatalysators (DMC) erhalten.

Es ist wünschenswert, die Herstellung von Elastomeren, bevorzugt Polyurethan-Elastomeren, in einem möglichst einfachen Reaktivverfahren durchzuführen, in dem über zwei unterschiedliche Verknüpfungsschritte ein makroskopisch elastisches, polymeres Netzwerk gebildet wird. Die Mischung soll zwecks Formgebung förderfähig mittels gängigen industriellen Apparaturen und machinen wie Kneter, Schnecken, ein- und zweiwellige Extruder sein. Optional sollen die beiden Verknüpfungsschritte unabhängig voneinander aktivierbar sein, sodass die Mischung nach dem ersten Verknüpfungsschritt formgebend weiterverarbeitet werden kann.

Die vorliegende Erfindung hat sich die Aufgabe gestellt, ein Verfahren zur Herstellung eines Elastomers, bevorzugt eines Polyurethan-Elastomers, aus einer solchen reaktiven Mischung bereitzustellen, bei dem derzeit verfügbare Polyethercarbonatpolyole eingesetzt werden können.

Aufgabenstellung war es, ein Elastomer mit verbesserten mechanischen Eigenschaften bereitzustellen, ohne die verwendeten Ausgangangskomponenten signifikant zu ändern oder zusätzliche Komponenten hinzuzufügen, um bestehende Anlagentechnik nutzen zu können. Im Speziellen war es die Aufgabe, Elastomere, bevorzugt Polyurethan basierte Elastomere, mit verbesserten Zugeigenschaften bei ähnlicher oder besserer Härte und guter Temperaturwechselbeständigkeit, bereitzustellen Erfindungsgemäß gelöst wurde die Aufgabe durch Umsetzung einer Polyolkomponente (A), enthaltend mindestens ein Kohlenstoff-Kohlenstoff Doppelbindungen enthaltendes Polyethercarbonatpolyol (A-1), mit einer Isocyanatkomponente (B-1) enthaltend NCO-Gruppen, in Gegenwart eines Radikalstarters (C), bevorzugt mindestens einem Peroxid (C-1), und optional eines Katalysators (D), wobei das molare Verhältnis der der NCO-Gruppen der Isocyanatkomponente (B-1) zu den OH-Gruppen der Kohlenstoff-Kohlenstoff Doppelbindungen enthaltenden Polyolkomponente (A) größer als 1,0 bevorzugt von 1,1 bis kleiner als 2,0 und besonders bevorzugt von 1,2 bis 1,6 ist.

In einer Ausführungsform umfasst das Verfahren zur Herstellung des Elastomers, bevorzugt eines Polyurethanhaltigen Elastomers die folgende Schritte:

i) Umsetzung einer Polyolkomponente (A), enthaltend mindestens ein Kohlenstoff-Kohlenstoff Doppelbindungen enthaltendes Polyethercarbonatpolyol (A-1), mit einer Isocyanatkomponente (B-1) enthaltend NCO-Gruppen, zu einem Polyurethan und

ii) Vernetzung des in i) erhaltenden Polyurethans, in Gegenwart von mindestens einem Radikalstarter (C), bevorzugt mindestens einem Peroxid (C-1),

wobei das molare Verhältnis der NCO-Gruppen der Isocyanatkomponente (B-1), zu den OH-Gruppen der Kohlenstoff-Kohlenstoff Doppelbindungen enthaltenden Polyolkomponente (A) größer als 1,0, bevorzugt von 1,1 bis kleiner als 2,0 und besonders bevorzugt von 1,2 bis 1,6 ist.

In einer alternativen Ausführungsform umfasst das Verfahren zur Herstellung eines Polyurethan-haltigen Elastomers die folgende Schritte:

(iii) Umsetzung einer Polyolkomponente (A), enthaltend mindestens ein Kohlenstoff-Kohlenstoff Doppelbindungen enthaltendes Polyethercarbonatpolyol (A-1) mit mindestens einem Radikalstarter (C), bevorzugt mindestens einem Peroxid (C-1),

(iv) Umesetzung des in Schritt (iii) erhaltenden Produkts mit einer einer Isocyanatkomponente (B-1) enthaltend NCO- Gruppen optional in Gegenwart eines Katalysators (D),

wobei das molare Verhältnis der NCO-Gruppen der Isocyanatkomponente (B-1), zu den OH-Gruppen der Kohlenstoff-Kohlenstoff Doppelbindungen enthaltenden Polyolkomponente (A) größer als 1,0, bevorzugt von 1,1 bis kleiner als 2,0 und besonders bevorzugt von 1,2 bis 1,6 ist.

Soweit nicht anders angezeigt bedeutet der Begriff "Doppelbindung" im Kontext der vorliegenden Anmeldung eine Kohlenstoff-Kohlenstoff-Doppelbindung, welche nicht Bestandteil eines aromatischen Systems ist.

Im Rahmen des erfindungsgemäßen Verfahrens sind unter Polyethercarbonatpolyolen auch Polyethercarbonatpolyole, Polyetherpolyestercarbonatpolyole und/oder Polycarbonatpolyole zu verstehen.

<u>Polyolkomponente (A)</u>

In einer Ausführungsform des erfindungsgemäßen Verfahrens besteht die Polyolkomponente (A) zu > 90 Gew.-%, bevorzugt aus > 95 Gew.-%, besonders bevorzugt aus > 99 Gew.-% aus dem Polyethercarbonatpolyol (A-1).

<u>Polyethercarbonatpolyol (A-1)</u>

In einer weiteren Ausgestaltung des erfindungsgemäßen Verfahrens weist das Kohlenstoff-Kohlenstoff Doppelbindungen enthaltende Polyethercarbonatpolyol (A-1) einen Gehalt an Kohlenstoff-Kohlenstoff Doppelbindungen von 0,5 Gew.-% bis 17,0 Gew.-%, bevorzugt von 1,0 Gew.-% bis 6,0 Gew.-% auf.

Der Gehalt an Kohlenstoff-Kohlenstoff Kohlenstoff-Kohlenstoff Doppelbindungen, im Polyethercarbonatpolyol ergibt sich für das Kohlenstoff-Kohlenstoff Doppelbindungen, enthaltende Polyethercarbonatpolyol als der Quotient des angegebenen Doppelbindungsgehalts der eingesetzten Polyethercarbonatpolyole angegeben in $C_2H_2$ Äquivalenten pro Masse Gesamtmasse des Polyethercarbonatpolyols und ist in $C_2H_2$ Äquivalenten pro Masse Polyethercarbonatpolyol angegeben.

In einer weiteren Ausgestaltung des erfindungsgemäßen Verfahrens weist das Kohlenstoff-Kohlenstoff Doppelbindungen enthaltende Polyethercarbonatpolyol (A-1) einen $CO_2$ Anteil von 0,5 Gew.-% bis 50 Gew.-%, bevorzugt von 5 Gew.-% bis 25 Gew.-%, auf.

In einer weiteren Ausgestaltung des erfindungsgemäßen Verfahrens ist das Kohlenstoff-Kohlenstoff Doppelbindungen enthaltende Polyethercarbonatpolyol erhältlich durch Anlagerung eines Alkylenoxids, mindestens eines Kohlenstoff-Kohlenstoff Doppelbindungshaltigen Monomers und $CO_2$ an eine H-funktionelle Starterverbindung in Gegenwart eines Doppelmetallcyanidkatalysators.

In dem erfindungsgemäßen Verfahren können als Alkylenoxide Alkylenoxide mit 2-45 Kohlenstoffatomen eingesetzt werden. Bei den Alkylenoxiden mit 2 - 45 Kohlenstoffatomen handelt es sich beispielsweise um eine oder mehrere Verbindungen ausgewählt aus der Gruppe umfassend Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, Alkylenoxide von C6-C22 $\alpha$-Olefinen, wie 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C1-C24-Ester epoxidierter Fettsäuren, Epichlorhydrin, Glycidol, und Derivate des Glycidols wie beispielsweise Glycidylether von C1-C22 Alkanolen, Glycidylester von C1-C22 Alkancarbonsäuren. Beispiele für Derivate des Glycidols sind Phenylglycidylether, Kresylglycidylether, Methylglycidylether, Ethylglycidylether und 2-Ethylhexylglycidylether. Vorzugsweise werden als Alkylenoxide Ethylenoxid und/oder Propylenoxid, insbesondere Propylenoxid eingesetzt werden. Werden Ethylenoxid und Propylenoxid in Mischung eingesetzt, so beträgt das molare Verhältnis EO/PO 1:99 bis 99:1, bevorzugt 5:95 bis 50:50. Werden Ethylenoxid und/oder Propylenoxid in Mischung mit anderen ungesättigten Alkylenoxiden eingesetzt, eingesetzt, so beträgt ihr Anteil 1 bis 40 mol-%, bevorzugt 2 bis 20 mol-%.

Als Katalysator für die Herstellung der erfindungsgemäßen Polyethercarbonatpolyole kann beispielsweise ein DMC-Katalysator (Doppel-Metall-Cyanid-Katalysator) eingesetzt. Es können zusätzlich oder alternativ auch andere Katalysatoren eingesetzt werden. Für die Copolymerisation von Alkylenoxiden und $CO_2$ können beispielsweise zusätzlich oder alternativ Zink-Carboxylate oder Kobalt-Salen-Komplexe eingesetzt werden. Geeignete Zink-Carboxylate sind beispielsweise Zinksalze von Carbonsäuren, insbesondere Dicarbonsäuren, wie Adipinsäure oder Glutarsäure. Eine Übersicht über die bekannten Katalysatoren für die Copolymerisation von Alkylenoxiden und $CO_2$ gibt zum Beispiel Chemical Communications 47(2011)141-163.

Es ist bevorzugt, dass der Katalysator ein DMC-Katalysator ist.

Die in dem erfindungsgemäßen Verfahren vorzugsweise einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Doppelmetallcyanid (DMC)-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyethercarbonaten bei sehr geringen Katalysatorkonzentrationen. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert-Butanol) noch einen Polyether mit einem zahlenmittlerem Molekulargewicht größer als 500 g/mol enthalten.

Die erfindungsgemäß einsetzbaren DMC-Katalysatoren werden vorzugsweise erhalten, indem man

(1.) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,

(2.) wobei im zweiten Schritt der Feststoff aus der aus (a) erhaltenen Suspension durch bekannte Techniken (wie Zentrifugation oder Filtration) abgetrennt wird,

(3.) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),

(4.) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäß einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise wird eine wässrige Zinkchlorid-Lösung (bevorzugt im Überschuss bezogen auf das Metallcyanidsalz) und Kaliumhexacyanocobaltat gemischt und anschließend Dimethoxyethan (Glyme) oder tert-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze weisen bevorzugt eine Zusammensetzung nach der allgemeinen Formel (II) auf,

$$M(X)_n \qquad \text{(II)}$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat und
n ist 2, wenn X = Halogenid, Hydroxid, Carboxylat, Cyanat, Thiocyanat, Isocyanat, Isothiocyanat oder Nitrat,

oder geeignete Metallsalze weisen bevorzugt eine Zusammensetzung nach der allgemeinen Formel (III) auf,

$$M_r(X)_3 \qquad \text{(III)}$$

wobei

M ausgewählt ist aus den Metallkationen $Fe^{3+}$, $Al^{3+}$, $Co^{3+}$ und $Cr^{3+}$,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanate Isocyanat, Isothiocyanat, Carboxylat, Oxalat und Nitrat;
r ist 2, wenn X = Sulfat, Carbonat oder Oxalat und
r ist 1, wenn X = Halogenid, Hydroxid, Carboxylat, Cyanat, Thiocyanat, Isocyanat, Isothiocyanat oder Nitrat,

oder geeignete Metallsalze weisen bevorzugt eine Zusammensetzung nach der allgemeinen Formel (IV) auf,

$$M(X)_s \qquad \text{(IV)}$$

wobei

M ausgewählt ist aus den Metallkationen $Mo^{4+}$, $V^{4+}$ und $W^{4+}$,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat und
s ist 4, wenn X = Halogenid, Hydroxid, Carboxylat, Cyanat, Thiocyanat, Isocyanat, Isothiocyanat oder Nitrat,

oder geeignete Metallsalze weisen bevorzugt eine Zusammensetzung nach der allgemeinen Formel (V) auf,

$$M(X)_t \qquad \text{(V),}$$

wobei

M ausgewählt ist aus den Metallkationen $Mo^{6+}$ und $W^{6+}$,
X umfasst ein oder mehrere (d.h. verschiedene) Anionen, vorzugsweise Anionen ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat und
t ist 6, wenn X = Halogenid, Hydroxid, Carboxylat, Cyanat, Thiocyanat, Isocyanat, Isothiocyanat oder Nitrat.

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze weisen bevorzugt eine Zusammensetzung nach der allgemeinen Formel (VI) auf

$$(Y)_a\,M'(CN)_b\,(A)_c \qquad (VI),$$

wobei
M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II), Y ausgewählt ist aus einem oder mehreren Metallkationen der Gruppe bestehend aus Alkalimetall (d.h. $Li^+$, $Na^+$, $K^+$, $Rb^+$)und Erdalkalimetall (d.h. $Be^{2+}$, $Mg^{2+}$, $Ca^{2+}$, $Sr^{2+}$, $Ba^{2+}$), A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calcium-hexacyanocobaltat(III) und Lithiumhexacyanocobaltat(III).

Bevorzugte Doppelmetallcyanid-Verbindungen, die in den erfindungsgemäß einsetzbaren DMC-Katalysatoren enthalten sind, sind Verbindungen mit Zusammensetzungen nach der allgemeinen Formel (VII)

$$M_x[M'_{x'}(CN)_y]_z \qquad (VII)$$

worin M wie in den Formeln (I) bis (IV) und
M' wie in Formel (V) definiert ist, und
x, x', y und z ganzzahlig sind und so gewählt, dass die Elektronenneutralität der Doppelmetallcyanidverbindung gegeben ist.

Vorzugsweise ist

x = 3, x'= 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zink-hexacyanoiridat(III), Zinkhexacyanoferrat(III) und Kobalt(II)hexacyanokobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt kann Zinkhexacyanokobaltat(III) verwendet werden.

Die bei der Herstellung der DMC-Katalysatoren zusetzbaren organischen Komplexliganden sind beispielsweise in US-A 5 158 922 (siehe insbesondere Spalte 6, Zeilen 9 bis 65), US 3 404 109, US 3 829 505, US 3 941 849, EP-A 700 949, EP-A 761 708, JP 4145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert-butylether, Diethylenglykol-mono-tert-butylether, Tripropylenglykolmono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert-butylether und 3-Methyl-3-oxetan-methanol.

Optional werden in der Herstellung der erfindungsgemäß einsetzbaren DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische Oberflächen- bzw. grenzflächenaktiven Verbindungen eingesetzt.

Bevorzugt werden bei der Herstellung der erfindungsgemäß einsetzbaren DMC-Katalysatoren die wässrigen Lösungen des Metallsalzes (z.B. Zinkchlorid) im ersten Schritt im stöchiometrischen Überschuss (mindestens 50 Mol-%) bezogen auf das Metallcyanidsalz eingesetzt. Dies entspricht mindestens einem molaren Verhältnis von Metallsalz zu Metallcyanidsalz von 2,25 zu 1,00. Das Metallcyanidsalz (z.B. Kaliumhexacyanokobaltat) wird in Gegenwart des organischen Komplexliganden (z.B. tert-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators, wie beispielsweise in WO-A 01/39883 beschrieben.

Im zweiten Schritt kann die Isolierung des Feststoffs (d.h. die Vorstufe des Katalysators) aus der Suspension durch bekannte Techniken, wie Zentrifugation oder Filtration, erfolgen.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäß einsetzbaren Katalysator entfernt werden. Bevorzugt liegt die Menge des organischen Komplexliganden in der wässrigen Waschlösung zwischen 40 und 80 Gew.%, bezogen auf die Gesamtlösung.

Optional wird im dritten Schritt der wässrigen Waschlösung eine weitere komplexbildende Komponente, bevorzugt im Bereich zwischen 0,5 und 5 Gew.%, bezogen auf die Gesamtlösung, zugefügt.

Außerdem ist es vorteilhaft, den isolierten Feststoff mehr als einmal zu waschen. Vorzugsweise wird in einem ersten Waschschritt (3.-1) mit einer wässrigen Lösung des ungesättigten Alkohols gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäß einsetzbaren Katalysator zu entfernen. Besonders bevorzugt liegt die Menge des ungesättigten Alkohols in der wässrigen Waschlösung zwischen 40 und 80 Gew.%, bezogen auf die Gesamtlösung des ersten Waschschritts. In den weiteren Waschschritten (3.-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus ungesättigtem Alkohol und weiterer komplexbildender Komponente (bevorzugt im Bereich zwischen 0,5 und 5 Gew.%, bezogen auf die Gesamtmenge der Waschlösung des Schrittes (3.-2)), als Waschlösung eingesetzt und der Feststoff damit einmal oder mehrmals, vorzugsweise einmal bis dreimal gewaschen.

Der isolierte und gegebenenfalls gewaschene Feststoff kann anschließend, gegebenenfalls nach Pulverisierung, bei Temperaturen von 20 - 100°C und bei Drücken von 0,1 mbar bis Normaldruck (1013 mbar) getrocknet werden.

Ein bevorzugtes Verfahren zur Isolierung der erfindungsgemäß einsetzbaren DMC-Katalysatoren aus der Suspension durch Filtration, Filterkuchenwäsche und Trocknung wird in WO-A 01/80994 beschrieben.

Für die Herstellung der erfindungsgemäßen Polyethercarbonatpolyole wird weiterhin mindestens eine H-funktionelle Starterverbindung eingesetzt.

Als geeignete H-funktionelle Starterverbindungen (Starter) können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$, besonders bevorzugt ist -OH. Als H-funktionelle Startersubstanz können beispielsweise eine oder mehrere Verbindungen ausgewählt

werden aus der Gruppe umfassend ein- oder mehrwertige Alkohole, mehrwertige Amine, mehrwertige Thiole, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z.B. sogenannte Jeffamine® von Huntsman, wie z.B. D-230, D-400, D-2000, T-403, T-3000, T-5000 oder entsprechende Produkte der BASF, wie z.B. Polyetheramin D230, D400, D200, T403, T5000), Polytetrahydrofurane (z.B. PolyTHF® der BASF, wie z.B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten. Beispielhaft handelt es sich bei den C1-C23 Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propargylalkohol, 2-Methyl-2-propanol, 1-*tert*-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, *tert*-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an ε-Caprolacton.

Die H-funktionellen Startersubstanzen können auch aus der Substanzklasse der Polyetherpolyole ausgewählt sein, insbesondere solchen mit einem Molekulargewicht $M_n$ im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®-Baygal®-, PET®- und Polyether-Polyole der Covestro AG (wie z. B. Desmophen® 3600Z, Desmophen® 1900U, Acclaim® Polyol 2200, Acclaim® Polyol 40001, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Startersubstanzen können auch aus der Substanzklasse der Polyesterpolyole ausgewählt sein, insbesondere solchen mit einem Molekulargewicht $M_n$ im Bereich von 200 bis 4500 g/mol. Als Polyesterpolyole können mindestens difunktionelle Polyester eingesetzt werden. Bevorzugt bestehen Polyesterpolyole aus alternierenden Säure- und Alkoholeinheiten. Als Säurekomponenten können z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydride eingesetzt werden. Als Alkoholkomponenten werden z.B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Bevorzugt werden Polyetherpolyole mit $M_n$ = 150 bis 2000 g/mol zur Herstellung der Polyesteretherpolyole eingesetzt.

Des Weiteren können als H-funktionelle Startersubstanzen Polycarbonatdiole eingesetzt werden, insbesondere solche mit einem Molekulargewicht $M_n$ im Bereich von 150 bis 4500 g/mol, vorzugsweise 500 bis 2500 g/mol, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z.B. in der EP-A 1359177. Beispielsweise können als Polycarbonatdiole die Desmophen® C-Typen der CovestroAG verwendet werden, wie z.B. Desmophen® C 1100 oder Desmophen® C 2200.

In einer weiteren Ausführungsform der Erfindung können Polyethercarbonatpolyole und/oder Polyetherestercarbonatpolyole als H-funktionelle Startersubstanzen eingesetzt werden. Insbesondere können Polyetherestercarbonatpolyole eingesetzt werden. Diese als H-funktionelle Startersubstanzen eingesetzten Polyetherestercarbonatpolyole können hierzu in einem separaten Reaktionsschritt zuvor hergestellt werden.

Die H-funktionellen Startersubstanzen weisen im Allgemeinen eine OH-Funktionalität (d.h. Anzahl an für die Polymerisation aktiven H-Atomen pro Molekül) von 1 bis 8, bevorzugt von 2 bis 6 und besonders bevorzugt von 2 bis 4 auf. Die H-funktionellen Startersubstanzen werden entweder einzeln oder als Gemisch aus mindestens zwei H-funktionellen Startersubstanzen eingesetzt.

Bevorzugte H-funktionelle Startersubstanzen sind Alkohole mit einer Zusammensetzung nach der allgemeinen Formel (VIII),

$$HO\text{-}(CH_2)_X\text{-}OH \qquad \text{(VIII)}$$

wobei x eine Zahl von 1 bis 20, bevorzugt eine gerade Zahl von 2 bis 20 ist. Beispiele für Alkohole gemäß Formel (VII) sind Ethylenglycol, 1,4-Butandiol, 1,6-Hexandiol, 1,8-Octandiol, 1,10 Decandiol und 1,12-Dodecandiol. Weitere bevorzugte H-funktionelle Startersubstanzen sind Neopentylglykol, Trimethylolpropan, Glycerin, Pentaerythrit, Umsetzungsprodukte der Alkohole gemäß Formel (VII) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Starterverbindungen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Starterverbindung und Propylenoxid bzw. einer di- oder tri-H-funktionellen Starterverbindung, Propylenoxid und Ethylenoxid aufgebaut ist. Die Polyetherpolyole haben bevorzugt eine OH-Funktionalität von 2 bis 4 und ein Molekulargewicht $M_n$ im Bereich von 62 bis 4500 g/mol und insbesondere ein Molekulargewicht $M_n$ im Bereich von 62 bis 3000 g/mol.

Das erfindungsgemäß verwendete $CO_2$ muss einen Reinheitsgrad von mindestens 80%, vorzugsweise von mindestens 95%, aufweisen, wobei der Anteil schwefelhaltiger Verunreinigungen, wie COS oder $SO_2$ unter 1 Gew.-%, vorzugsweise unter 0,1 Gew.-%, liegen muss. Es wird vorzugsweise $CO_2$ verwendet, das als Nebenprodukt bei der Ammoniakherstellung, der Ethylenoxidherstellung, durch die Wassergas-shift-Reaktion, bei Verbrennungsprozessen, vorzugsweise in Kraftwerken, oder beim Kalkbrennen anfällt. Gegebenenfalls müssen Reinigungsschritte folgen, bei denen insbesondere schwefelhaltige Verunreinigungen, aber auch Kohlenmonoxid entfernt werden. Inerte Gase, wie Stickstoff oder Argon dürfen bis zu einem Gehalt von unter 20%, vorzugsweise von unter 5%, enthalten sein. Besonders bevorzugt wird $CO_2$ verwendet, das als Nebenprodukt bei der Ammoniakherstellung anfällt oder durch Wassergas-shift-Reaktion hergestellt wird, da $CO_2$ aus diesen Quellen besonders niedrige Gehalte an schwefelhaltigen Verunreinigungen aufweisen.

In einer weiteren Ausgestaltung des Verfahrens wird das Kohlenstoff-Kohlenstoff Doppelbindungshaltige Monomer ausgewählt wird aus mindestenes einem der Monomere aus einer oder mehrerer der Gruppen bestehend aus

(a) Allylglycidylether, Vinylcyclohexenoxid, Cyclooctadienmonoepoxid, Cyclododecatrienmonoepoxid, Butadienmonoepoxid, Isoprenmonoepoxid, Limonenoxid, 1,4-Divinylbenzolmonoepoxid, 1,3-Divinylbenzolmonoepoxid, Glycidylester ungesättigter Fettsäuren wie besipeislweise Ölsäure, Linolsäure, Konjuenfettsäure, oder Linolensäure, teilweise epoxidierte Fette und Öle, wie teilweise epoxidiertes Sojaöl, Leinöl, Rapsöl, Palmöl oder Sonnenblumenöl, und/oder deren Mischungen.

(b) Alkylenoxid mit Doppelbindung der allgemeinen Formel (IX) ist:

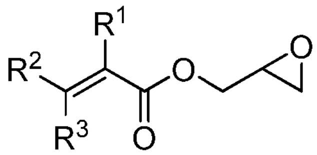

(IX)

wobei $R_1$ bis $R_3$ unabhängig voneinander H, Halogen, substituierte oder nicht-substituierte C1-C22-Alkyl, substituierte oder nicht-substituierte C6-C12 Aryl sind. Die Verbindungen nach obiger Formel (IX) zeigen als bevorzugte Vertreter der Gruppe der Glycidylester $\alpha,\beta$-ungesättigter Säuren ein Substitutionsmuster, welches sich in besonderer Weise zum Aufbau von Polyethercarbonatpolyolen mit ungesättigten Gruppen eignet. Diese Verbindungsklasse lässt sich mittels des erfindungsgemäß einsetzbaren DMC-Katalysators mit hohen Ausbeuten zu Polyethercarbonatpolyolen mit ungesätttigten Gruppen umsetzten. Des Weiteren können sich durch die sterischen und elektronischen Voraussetzungen im Bereich der Doppelbindung, gute Möglichkeiten zur weiteren Umsetzung zu höhermolekularen, vernetzten Polyethercarbonatpolyolen ergeben.

(c) cyclisches Anhydrid der Formel (X), (XI) oder (XII) entspricht:

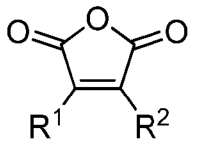

(X)

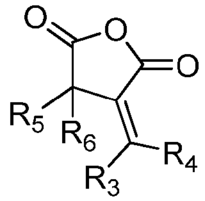

(XI)

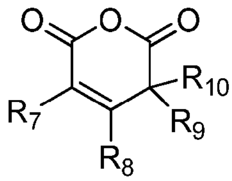

,

(XII)

wobei $R_1$ bis $R_{10}$ unabhängig voneinander H, Halogen, substituierte oder nicht-substituierte C1-C22-Alkyl, substituierte oder nicht-substituierte C6-C12 Aryl sind. Bevorzugte Verbindungen der Formel (IX), (X) (XI) sind Maleinsäureanhydrid, Halogen- oder Alkylsubstituierte Maleinsäureanhydride und Itaconsäureanhydrid.
und

(d) 4-Cyclohexen-1,2-disäureanhydrid, 4-Methyl-4-cyclohexen-1,2-disäureanhydrid, 5,6-Norbornen-2,3-disäureanhydrid, Allyl-5,6-norbornen-2,3-disäureanhydrid, Dodecenylbernsteinsäureanhydrid, Tetradecenylbernsteinsäureanhydrid, Hexadecenylbernsteinsäureanhydrid und Octadecenylbernsteinsäureanhydrid.

In einer weiteren Ausgestaltung des Verfahrens wird das Kohlenstoff-Kohlenstoff Doppelbindungshaltige Monomer ausgewählt wird aus mindestenes einem der Monomere aus einer oder mehrerer der Gruppen bestehend aus

(a) Allylglycidylether, Vinylcyclohexenoxid und Limonenoxid
(b) Glycidylacrylat und Glycidylmethacrylat,
(c) Maleinsäureanhydrid und Itaconsäureanhydrid
und
(d) 4-Cyclohexen-1,2-disäureanhydrid und 5,6-Norbornen-2,3-disäureanhydrid.

In einer weiteren Ausführungsform des erfindungsgemäßen Verfahrens wird das Kohlenstoff-Kohlenstoff Doppelbindungshaltige Monomer ausgewählt wird aus Maleinsäureanhydrid und/oder Allylglycidylether bevorzugt Maleinsäureanhydrid.

Das molare Verhältnis der eingesetzten gesättigten Alkylenoxide zu dem mindestens einen weiteren Kohlenstoff-Kohlenstoff Doppelbindungshaltigen Monomer beträgt von 55,0 mol-% bis 99,5 mol-%, bevorzugt von 60,0 mol-% bis 99,0 mol-%.

Das mindestens eine weitern Kohlenstoff-Kohlenstoff Doppelbindungshaltigen Monomer kann statistisch oder blockweise in den Kohlenstoff-Kohlenstoff Doppelbindungen enthaltenden Polyethercarbonatpolyolen verteilt sein. Auch Gradientenpolymere sind einsetzbar.

Der Begriff Terpolymerisation im Sinne der Erfindung beinhaltet die Polymerisation von mindestens einem Alkylenoxid, mindestens einem weiteren Kohlenstoff-Kohlenstoff Doppelbindungshaltigen Monomer und $CO_2$. Terpolymerisation im Sinne der Erfindung schließt insbesondere auch die Copolymerisation von gesamt mehr als drei Monomeren mit ein.

Eine bevorzugte Ausführungsform des erfindungsgemäß einsetzbaren Verfahrens zur Herstellung von Kohlenstoff-Kohlenstoff Doppelbindungen enthaltenden Polyethercarbonatpolyolen (A-1) ist dadurch gekennzeichnet, dass

(α) [erste Aktivierungsstufe] ein Suspensionsmittel, das keine H-funktionellen Gruppen enthält, eine H-funktionelle Starterverbindung, ein Gemisch aus einem Suspensionsmittel, das keine H-funktionellen Gruppen enthält und einer H-funktionellen Starterverbindung oder ein Gemisch aus mindestens zwei H-funktionellen Starterverbindungen vorgelegt und gegebenenfalls Wasser und/oder andere leicht flüchtige Verbindungen durch erhöhte Temperatur und/oder reduziertem Druck entfernt werden, wobei der DMC-Katalysator dem Suspensionsmittel, das keine H-funktionellen Gruppen enthält, der H-funktionellen Starterverbindung, dem Gemisch aus einem Suspensionsmittel, das keine H-funktionellen Gruppen enthält und der H-funktionellen Starterverbindung oder dem Gemisch aus mindestens zwei H-funktionellen Starterverbindungen vor oder nach der ersten Aktivierungsstufe zugesetzt wird,

(β) [zweite Aktivierungsstufe] eine Teilmenge (bezogen auf die Gesamtmenge der in den Schritten (β) und (γ) eingesetzten Menge an Alkylenoxiden) von einem oder mehreren Alkylenoxiden zu der aus Schritt (α) resultierenden Mischung zugesetzt wird, wobei die Zugabe einer Teilmenge an Alkylenoxid gegebenenfalls in Gegenwart von $CO_2$ und/oder Inertgas (wie beispielsweise Stickstoff oder Argon) erfolgen kann, und wobei der Schritt (β) auch mehrfach erfolgen kann,

(γ) [Polymerisationsstufe] ein oder mehrere Alkylenoxiden, mindestens einer ungesättigter Verbindung (Alkylenoxid und/oder cyclisches Anhydrid) und Kohlendioxid zu der aus Schritt (β) resultierenden Mischung fortwährend zudosiert werden, wobei die für die Terpolymerisation eingesetzten Alkylenoxide gleich oder von den bei Schritt (β) eingesetzten Alkylenoxiden verschieden sein können.

Im Folgenden wird diese bevorzugte Ausführungsform am Beispiel der Polyethercarbonatpolyole detailliert beschrieben:

<u>Zu Schritt (α):</u>

Die Zugabe der einzelnen Komponenten in Schritt (α) kann gleichzeitig oder nacheinander in beliebiger Reihenfolge erfolgen; bevorzugt wird in Schritt (α) zunächst der DMC-Katalysator vorgelegt und gleichzeitig oder anschließend das Suspensionsmittel, das keine H-funktionellen Gruppen enthält, die H-funktionelle Starterverbindung, das Gemisch aus einem Suspensionsmittel, das keine H-funktionellen Gruppen enthält und der H-funktionellen Starterverbindung oder das Gemisch aus mindestens zwei H-funktionellen Starterverbindungen zugesetzt.

Gegenstand einer bevorzugten Ausführungsform ist ein Verfahren, wobei in Schritt (α) [erste Aktivierungsstufe]

(α1) in einem Reaktor der DMC-Katalysator und ein Suspensionsmittel und/oder eine oder mehrere H-funktionelle Starterverbindungen vorgelegt werden,

(α2) durch den Reaktor bei einer Temperatur von 50 bis 200°C, bevorzugt von 80 bis 160°C, besonders bevorzugt von 125 bis 135°C ein Inertgas (beispielsweise Stickstoff oder ein Edelgas wie Argon), ein Inertgas-Kohlendioxid-Gemisch oder Kohlendioxid geleitet wird und gleichzeitig durch Entfernen des Inertgases oder Kohlendioxids (beispielsweise mit einer Pumpe) ein reduzierter Druck (absolut) von 10 mbar bis 800 mbar, bevorzugt von 40 mbar bis 200 mbar im Reaktor eingestellt wird.

Gegenstand einer weiteren bevorzugten Ausführungsform ist ein Verfahren, wobei in Schritt (α) [erste Aktivierungsstufe]

(α1) ein Suspensionsmittel, das keine H-funktionellen Gruppen enthält, eine H-funktionelle Starterverbindung, ein Gemisch aus einem Suspensionsmittel, das keine H-funktionellen Gruppen enthält und einer H-funktionellen Starterverbindung oder ein Gemisch aus mindestens zwei H-funktionellen Starterverbindungen, gegebenenfalls unter Inertgasatmosphäre, unter einer Atmosphäre aus Inertgas-Kohlendioxid-Gemisch oder unter einer reinen Kohlendioxid-Atmosphäre, besonders bevorzugt unter Inertgasatmosphäre vorgelegt wird und

(α2) in das resultierende Gemisch aus DMC-Katalysator und dem Suspensionsmittel, das keine H-funktionellen Gruppen enthält, der H-funktionellen Starterverbindung, dem Gemisch aus einem Suspensionsmittel, das keine H-funktionellen Gruppen enthält und der H-funktionellen Starterverbindung oder dem Gemisch aus mindestens zwei H-funktionellen Starterverbindungen bei einer Temperatur von 50 bis 200°C, bevorzugt von 80 bis 160°C, besonders bevorzugt von 125 bis 135°C ein Inertgas, ein Inertgas-Kohlendioxid-Gemisch oder Kohlendioxid, besonders bevorzugt Inertgas eingeleitet und gleichzeitig durch Entfernen des Inertgases oder Kohlendioxids (beispielsweise mit einer Pumpe) ein reduzierter Druck (absolut) von 10 mbar bis 800 mbar, bevorzugt von 40 mbar bis 200 mbar im Reaktor eingestellt wird,

wobei der Doppelmetallcyanid-Katalysator zu dem Suspensionsmittel, das keine H-funktionellen Gruppen enthält, der H-funktionellen Starterverbindung, dem Gemisch aus einem Suspensionsmittel, das keine H-funktionellen Gruppen enthält und der H-funktionellen Starterverbindung oder dem Gemisch aus mindestens zwei H-funktionellen Starterverbindungen in Schritt (α1) oder unmittelbar anschließend in Schritt (α2) zugesetzt werden kann.

Der DMC-Katalysator kann in fester Form oder in einem Suspensionsmittel und/oder einer H-funktionellen Starterverbindung suspendiert zugegeben werden. Wird der DMC-Katalysator als Suspension zugegeben, wird diese bevorzugt in Schritt (α1) dem Suspensionsmittel und/oder der einen oder mehreren H-funktionellen Starterverbindungen zugefügt.

Zu Schritt (β):

Der Schritt (β) der zweiten Aktivierungsstufe kann in Gegenwart von $CO_2$ und/oder Inertgas erfolgen. Bevorzugt erfolgt Schritt (β) unter einer Atmosphäre aus einem Inertgas-Kohlendioxid-Gemisch (beispielsweise Stickstoff-Kohlendioxid oder Argon-Kohlendioxid) oder einer Kohlendioxid-Atmosphäre, besonders bevorzugt unter Kohlendioxid-Atmosphäre. Das Einstellen einer Inertgas-Kohlendioxid-Atmosphäre oder einer Kohlendioxid-Atmosphäre und die Dosierung eines oder mehrerer Alkylenoxide können prinzipiell in unterschiedlicher Weise erfolgen. Der Vordruck wird bevorzugt durch Einleiten von Kohlendioxid eingestellt, wobei der Druck (absolut) 10 mbar bis 100 bar, vorzugsweise 100 mbar bis 50 bar und besonders bevorzugt 500 mbar bis 50 bar beträgt. Der Start der Dosierung des Alkylenoxids kann bei einem beliebig zuvor gewählten Vordruck erfolgen. Als Gesamtdruck (absolut) der Atmosphäre wird in Schritt (β) vorzugsweise im Bereich von 10 mbar bis 100 bar, vorzugsweise 100 mbar bis 50 bar und weiterhin bevorzugt 500 mbar bis 50 bar eingestellt. Gegebenenfalls wird während oder nach der Dosierung des Alkylenoxids der Druck durch Einleiten weiteren Kohlendioxids nachgeregelt, wobei der Druck (absolut) 10 mbar bis 100 bar, vorzugsweise 100 mbar bis 50 bar und bevorzugt 500 mbar bis 50 bar beträgt.

In einer bevorzugten Ausführungsform beträgt die bei der Aktivierung in Schritt (β) eingesetzte Menge an einem oder mehreren Alkylenoxiden 0,1 bis 25,0 Gew.-%, bevorzugt 1,0 bis 20,0 Gew.-%, besonders bevorzugt 2,0 bis 16,0 Gew.-%, bezogen auf die im Schritt (α) eingesetzte Menge an Suspensionsmittel und/oder H-funktioneller Starterverbindung. Das Alkylenoxid kann in einem Schritt oder schrittweise in mehreren Teilmengen zugegeben werden.

In einer besonders bevorzugten Ausführungsform der Erfindung wird bei der Aktivierung in Schritt (β) [zweite Aktivierungsstufe] eine Teilmenge (bezogen auf die Gesamtmenge der in den Schritten (β) und (γ) eingesetzten Menge an Alkylenoxiden) von einem oder mehreren Alkylenoxiden zu der aus Schritt (α) resultierenden Mischung zugesetzt, wobei die Zugabe einer Teilmenge an Alkylenoxid gegebenenfalls in Gegenwart von $CO_2$ und/oder Inertgas erfolgen kann. Der Schritt (β) kann auch mehrfach erfolgen. Der DMC-Katalysator wird vorzugsweise in einer Menge eingesetzt, so dass der Gehalt an DMC-Katalysator im resultierenden Doppelbindungen enthaltenden Polyethercarbonatpolyol 10 ppm bis 10000 ppm, besonders bevorzugt 20 ppm bis 5000 ppm und höchst bevorzugt 50 ppm bis 500 ppm beträgt.

Im zweiten Aktivierungsschritt kann das Alkylenoxid beispielsweise in einer Portion oder innerhalb von 1 bis 15 Minuten, vorzugsweise 5 bis 10 Minuten zugegeben. Die Dauer des zweiten Aktivierungsschritts beträgt bevorzugt 15 bis 240 Minuten, besonders bevorzugt 20 bis 60 Minuten.

Zu Schritt (γ):

Die Dosierung des oder der Alkylenoxide, der ungesättigten Verbindungen, im Folgenden auch als Monomere bezeichnet, und des Kohlendioxids kann simultan, wechselweise oder sequentiell erfolgen, wobei die gesamte Kohlendioxidmenge auf einmal oder über die Reaktionszeit dosiert zugegeben werden kann. Es ist möglich, während der Zugabe der Monomere den $CO_2$-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung der Monomere kann simultan, wechselweise oder sequentiell zur Kohlendioxid-Dosierung erfolgen. Es ist möglich, die Monomere mit einer konstanten Dosierrate zu dosieren oder die Dosierrate kontinuierlich oder schrittweise zu steigern oder zu senken oder die Monomere portionsweise zuzugeben. Bevorzugt werden die Monomere mit konstanter Dosierrate dem Reaktionsgemisch zugegeben. Werden mehrere Alkylenoxide zur Synthese der Doppelbindungen enthaltenden Polyethercarbonatpolyole eingesetzt, so können die Alkylenoxide einzeln oder als Gemisch zudosiert werden. Die Dosierung der Alkylenoxide kann simultan, wechselweise oder sequentiell über jeweils separate Dosierungen (Zugaben) erfolgen oder über eine oder mehrere Dosierungen, wobei die Alkylenoxide einzeln oder als Gemisch dosiert werden können. Über die Art und/oder Reihenfolge der Dosierung der Monomere und/oder des Kohlendioxids ist es möglich, statistische, alternierende, blockartige oder gradientenartige Doppelbindungen enthaltende

Polyethercarbonatpolyole zu synthetisieren.

Vorzugsweise wird ein Überschuss an Kohlendioxid bezogen auf die berechnete Menge an benötigtem Kohlendioxid in Doppelbindungen enthaltenden Polyethercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Doppelbindungen enthaltenden Polyethercarbonatpolyole als vorteilhaft erwiesen. Es ist möglich, das Kohlendioxid dem Reaktionsbehälter kontinuierlich oder diskontinuierlich zuzuführen. Dies hängt davon ab, wie schnell die Monomere und das $CO_2$ verbraucht werden und ob das Produkt gegebenenfalls $CO_2$-freie Polyether-Blöcke oder Blöcke mit unterschiedlichem $CO_2$-Gehalt enthalten soll. Die Konzentration des Kohlendioxids kann bei der Zugabe der Monomere ebenso variieren. Je nach gewählten Reaktionsbedingungen ist es möglich, das $CO_2$ im gasförmigen, flüssigen oder überkritischen Zustand in den Reaktor einzuleiten. $CO_2$ kann auch als Feststoff in den Reaktor gegeben werden und dann unter den gewählten Reaktionsbedingungen in den gasförmigen, gelösten, flüssigen und/oder überkritischen Zustand übergehen.

In Schritt (γ) kann das Kohlendioxid beispielsweise in die Mischung eingeleitet werden durch

(i) Begasung des Reaktionsgemisches im Reaktor von unten,

(ii) Verwendung eines Hohlwellenrührers,

(iii) eine Kombination aus den Dosierungen gemäß (i) und (ii), und/oder

(iv) Begasung über die Flüssigkeitsoberfläche durch Einsatz mehrstufiger ausgeführter Rührorgane.

Schritt (γ) wird beispielsweise bei Temperaturen von 60 bis 150°C, vorzugsweise von 80 bis 120°C, ganz besonders bevorzugt von 90 bis 110°C durchgeführt. Werden Temperaturen unterhalb von 60°C eingestellt, kommt die Reaktion zum Erliegen. Bei Temperaturen oberhalb von 150°C steigt die Menge an unerwünschten Nebenprodukten stark an.

Die Begasung des Reaktionsgemisches im Reaktor gemäß (i) erfolgt bevorzugt über einen Begasungsring, eine Begasungsdüse oder über ein Gaseinleitungsrohr. Bei dem Begasungsring handelt es sich vorzugsweise um eine ringförmige Anordnung oder um zwei oder mehrere ringförmige Anordnungen von Begasungsdüsen, die bevorzugt am Boden des Reaktors und/oder an der Seitenwand des Reaktors angeordnet sind.

Der Hohlwellenrührer gemäß (ii) ist bevorzugt ein Rührer, bei dem das Gas über eine hohle Welle des Rührers in die Reaktionsmischung eingeleitet wird. Durch die Drehung des Rührers in der Reaktionsmischung (d.h. beim Mischen) entsteht an dem mit der Hohlwelle verbundenen Ende des Rührflügels ein Unterdruck derart, dass die Gasphase (enthaltend $CO_2$ und ggf. unverbrauchte Monomere) aus dem über der Reaktionsmischung befindlichen Gasraum abgesaugt und über die Hohlwelle des Rührers in die Reaktionsmischung geleitet wird.

Die Begasung des Reaktionsgemisches gemäß (i), (ii), (iii) oder (iv) kann jeweils mit frisch zudosiertem Kohlendioxid erfolgen und/oder mit einer Absaugung des Gases aus dem Gasraum über der Reaktionsmischung und anschließender Rekompression des Gases kombiniert werden. Beispielsweise wird das aus dem Gasraum über der Reaktionsmischung abgesaugte und komprimierte Gas, gegebenenfalls gemischt mit frischem Kohlendioxid und/oder Monomeren, wieder in das Reaktionsgemisches gemäß (i), (ii), (iii) und/oder (iv) eingeleitet.

Bevorzugt wird der Druckabfall, welcher über Einbau des Kohlendioxids, der Monomere bei der Terpolymerisation in das Reaktionsprodukt entsteht, über frisch zudosiertes Kohlendioxid ausgeglichen.

Die Einleitung der Monomere kann separat oder zusammen mit dem $CO_2$ sowohl über die Flüssigkeitsoberfläche oder direkt in die flüssige Phase erfolgen. Bevorzugt erfolgt die Einleitung der Monomere direkt in die flüssige Phase, da dies den Vorteil hat, dass eine rasche Durchmischung der eingebrachten Monomere mit der flüssigen Phase erfolgt und so lokale Konzentrationsspitzen der Monomere vermieden werden. Die Einleitung in die flüssige Phase kann über ein oder mehrere Einleitungsrohre, eine oder mehrere Düsen oder eine oder mehrere ringförmige Anordnungen von Mehrfach-Dosierstellen erfolgen, die bevorzugt am Boden des Reaktors und/oder an der Seitenwand des Reaktors angeordnet sind.

Die drei Schritte (α), (β) und (γ) können in demselben Reaktor oder jeweils separat in unterschiedlichen Reaktoren durchgeführt werden. Besonders bevorzugte Reaktortypen sind Rührkessel, Rohrreaktor und Schlaufenreaktor. Werden die Reaktionsschritte (α), (βß) und (γ) in unterschiedlichen Reaktoren durchgeführt, kann für jeden Schritt ein unterschiedlicher Reaktortyp verwenden werden.

Doppelbindungen enthaltende Polyethercarbonatpolyole können in einem Rührkessel hergestellt werden, wobei der Rührkessel je nach Ausführungsform und Betriebsweise über den Reaktormantel, innen liegende und/oder in einem Umpumpkreislauf befindliche Kühlflächen gekühlt wird. Sowohl in der semi-batch Anwendung, bei der das Produkt erst nach Ende der Reaktion entnommen wird, als auch in der kontinuierlichen Anwendung, bei der das Produkt kontinuierlich entnommen wird, ist besonders auf die Dosiergeschwindigkeit der Monomere zu achten. Sie ist so einzustellen, dass trotz der inhibierenden Wirkung des Kohlendioxids die Monomere genügend schnell abreagieren. Die Konzentration an freien Monomeren in der Reaktionsmischung während der zweiten Aktivierungsstufe (Schritt β) beträgt vorzugsweise > 0 bis 100 Gew.-%, besonders bevorzugt > 0 bis 50 Gew.-%, höchst bevorzugt > 0 bis 20 Gew.-% (jeweils bezogen auf das Gewicht der Reaktionsmischung). Die Konzentration an freien Monomeren in der Reaktionsmischung während der Reaktion (Schritt γ) beträgt vorzugsweise > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung).

Eine weitere mögliche Ausführungsform für die Copolymerisation (Schritt γ) ist dadurch gekennzeichnet, dass auch eine oder mehrere H-funktionelle Starterverbindungen während der Reaktion kontinuierlich in den Reaktor zudosiert werden. Bei einer Durchführung des Verfahrens im semi-batch Betrieb beträgt die Menge der H-funktionellen Starterverbindungen, die während der Reaktion kontinuierlich in den Reaktor zudosiert werden, bevorzugt mindestens 20 mol% Äquivalente, besonders bevorzugt 70 bis 95 mol% Äquivalente (jeweils bezogen auf die gesamte Menge an H-funktionellen Starterverbindungen). Bei einer kontinuierlichen Durchführung des Verfahrens beträgt die Menge der H-funktionellen Starterverbindungen, die während der Reaktion kontinuierlich in den Reaktor zudosiert werden, bevorzugt mindestens 80 mol% Äquivalente, besonders bevorzugt 95 bis 99,99 mol% Äquivalente (jeweils bezogen auf die gesamte Menge an H-funktionellen Starterverbindungen).

In einer bevorzugten Ausführungsform wird die gemäß den Schritten (α) und (β) aktivierte Katalysator-Starter-Mischung in demselben Reaktor weiter mit den Monomeren und Kohlendioxid umgesetzt. In einer weiteren bevorzugten Ausführungsform wird die gemäß den Schritten (α) und (β) aktivierte Katalysator-Starter-Mischung in einem anderen Reaktionsbehältnis (beispielsweise einem Rührkessel, Rohrreaktor oder Schlaufenreaktor) weiter mit den Monomeren und Kohlendioxid umgesetzt. In einer weiteren bevorzugten Ausführungsform wird die gemäß dem Schritt (α) vorbereitete Katalysator-Starter-Mischung in einem anderen Reaktionsbehältnis (beispielsweise einem Rührkessel, Rohrreaktor oder Schlaufenreaktor) gemäß den Schritten (β) und (γ) mit den Monomeren und Kohlendioxid umgesetzt.

Bei Reaktionsführung in einem Rohrreaktor werden die gemäß Schritt (α) vorbereitete Katalysator-Starter-Mischung oder die gemäß der Schritte (α) und (β) aktivierte Katalysator-Starter-Mischung und gegebenenfalls weitere Starter sowie die Monomeren und Kohlendioxid kontinuierlich durch ein Rohr gepumpt. Bei Verwendung einer gemäß Schritt (α) vorbereiteten Katalysator-Starter-Mischung erfolgt die zweite Aktivierungsstufe gemäß Schritt (β) im ersten Teil des Rohrreaktors und die Terpolymerisation gemäß Schritt (γ) im zweiten Teil des Rohrreaktors. Die molaren Verhältnisse der Reaktionspartner variieren je nach gewünschtem Polymer.

In einer Verfahrensvariante wird Kohlendioxid in seiner flüssigen oder überkritischen Form zudosiert, um eine optimale Mischbarkeit der Komponenten zu ermöglichen. Das Kohlendioxid kann am Eingang des Reaktors und/oder über Dosierstellen, die entlang des Reaktors angeordnet sind, in dem Reaktor eingebracht werden. Eine Teilmenge der Monomere kann am Eingang des Reaktors eingebracht werden. Die Restmenge der Monomere wird bevorzugt über mehrere Dosierstellen, die entlang des Reaktors angeordnet sind, in den Reaktor eingebracht. Vorteilhafterweise werden Mischelemente, wie sie zum Beispiel von der Firma Ehrfeld Mikrotechnik BTS GmbH vertrieben werden, zur besseren Durchmischung der Reaktionspartner eingebaut oder Mischer-Wärmetauscherelemente, die gleichzeitig die Durchmischung und Wärmeabfuhr verbessern. Bevorzugt wird durch die Mischelemente zudosiertes $CO_2$ und die Monomere mit der Reaktionsmischung vermischt. In einer alternativen Ausführungsform werden verschiedene Volumenelemente der Reaktionsmischung miteinander vermischt.

Schlaufenreaktoren können ebenfalls zur Herstellung von Doppelbindungen enthaltenden Polyethercarbonatpolyolen verwendet werden. Hierunter fallen im Allgemeinen Reaktoren mit interner und/oder externer Stoffrückführung (ggf. mit im Kreislauf angeordneten Wärmetauscherflächen), wie beispielsweise ein Strahlschlaufenreaktor, Jet-Loop Reaktor oder Venturi-Loop Reaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren oder mehreren hintereinander geschalteten Rührkesseln.

Um einen vollständigen Umsatz zu realisieren, kann dem Reaktionsapparat, in dem der Schritt (γ) durchgeführt wird, häufig ein weiterer Kessel oder ein Rohr ("Verweilrohr") nachgeschaltet sein, in dem nach der Reaktion vorhandene Restkonzentrationen freier Monomere abreagieren. Bevorzugt liegt der Druck in diesem nachgeschalteten Reaktor bei demselben Druck wie in dem Reaktionsapparat, in dem der Reaktionsschritt (γ) durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt (γ) ganz oder teilweise abgelassen und der nachgeschaltete Reaktor bei Normaldruck oder einem geringen Überdruck betrieben. Die Temperatur in dem nachgeschalteten Reaktor liegt bevorzugt bei 10 bis 150°C und besonders bevorzugt bei 20 bis 100°C. Das Reaktionsgemisch enthält am Ende der Nachreaktionszeit bzw. am Ausgang des nachgeschalteten Reaktors vorzugsweise weniger als 0,05 Gew.-% an Monomeren. Die Nachreaktionszeit bzw. die Verweilzeit im nachgeschalteten Reaktor beträgt bevorzugt 10 min bis 24 h, besonders bevorzugt 10 min bis 3 h.

In einer weiteren bevorzugten Ausführungsform des Verfahrens zur Herstellung der Polyethercarbonatpolyolen kann die Temperatur im Schritt (γ) größer oder gleich 60°C und kleiner oder gleich 150 °C betragen. In einer besonders

bevorzugten Ausführungsform des Verfahrens kann die Temperatur im Schritt (γ) größer oder gleich 80°C und kleiner oder gleich 130 °C und ganz besonders bevorzugt größer oder gleich 90°C und kleiner oder gleich 120 °C betragen. Dieser Temperaturbereich während der Polymerisation hat sich als besonders geeignet erwiesen, um mit einer hinreichenden Reaktionsgeschwindigkeit und mit einer hohen Selektivität die Polyethercarbonatpolyole mit ungesättigten Gruppen zu synthetisieren. Im Bereich niedrigerer Temperaturen kann sich eine nur ungenügende Reaktionsgeschwindigkeit einstellen und bei höheren Temperaturen kann der Anteil an unerwünschten Nebenprodukten zu stark ansteigen. Beispielsweise kann es bei Wahl zu hoher Temperaturen zu einer vorzeitigen Vernetzung der ungesättigten Gruppen kommen.

Die erfindungsgemäß erhältlichen Doppelbindungen enthaltenden Polyethercarbonatpolyole haben vorzugsweise eine durchschnittliche OH-Funktionalität (d.h. durchschnittliche Anzahl von OH-Gruppen pro Molekül) von mindestens 1, bevorzugt von 1,5 bis 10, besonders bevorzugt von $\geq$ 2,0 bis $\leq$ 4,0.

Das Molekulargewicht der erhaltenen Doppelbindungen enthaltenden Polyethercarbonatpolyole beträgt bevorzugt mindestens 400 g/mol, besonders bevorzugt 400 bis 1’000’000 g/mol und höchst bevorzugt 500 bis 60’000 g/mol.

Die Suspensionsmittel, die in Schritt (α) zum Suspendieren des Katalysators eingesetzt werden, enthalten keine H-funktionellen Gruppen. Als Suspensionsmittel sind alle polar-aprotischen, schwach polar-aprotischen und unpolar-aprotischen Lösungsmittel geeignet, die jeweils keine H-funktionellen Gruppen enthalten. Als Suspensionsmittel können auch eine Mischung aus zwei oder mehrerer dieser Suspensionsmittel eingesetzt werden. Beispielhaft seien an dieser Stelle folgende polar-aprotischen Lösungsmittel genannt: 4-Methyl-2-oxo-1,3-dioxolan (im Folgenden auch als cyclisches Propylencarbonat bezeichnet), 1,3-Dioxolan-2-on, Aceton, Methylethylketon, Acetonitril, Nitromethan, Dimethylsulfoxid, Sulfolan, Dimethylformamid, Dimethylacetamid und *N*-Methylpyrrolidon. Zu der Gruppe der unpolar- und schwach polar-aprotischen Lösungsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlenwasserstoffe, wie z.B., Chloroform, Chlorbenzol, Dichlorbenzol und Tetrachlorkohlenstoff. Bevorzugt als Suspensionsmittel werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3-Dioxolan-2-on oder eine Mischung aus 4-Methyl-2-oxo-1,3-dioxolan und 1,3-Dioxolan-2-on.

In einer alternativen Ausführungsform werden als Suspensionsmittel, die in Schritt (α) zum Suspendieren des Katalysators eingesetzt werden, eine oder mehrere Verbindung(en) ausgewählt aus der Gruppe bestehend aus aliphatischen Lactonen, aromatischen Lactonen, Lactiden, cyclischen Carbonaten mit mindestens drei gegebenenfalls substituierten Methylengruppen zwischen den Sauerstoffatomen der Carbonatgruppe, aliphatischen cyclischen Anhydriden und aromatischen cyclischen Anhydriden. Ohne an eine Theorie gebunden zu sein, werden solche Suspensionsmittel im späteren Verlauf der Polymerisationsverlauf in Gegenwart eines Starters in die Polymerkette eingebaut. Dadurch entfallen nachgelagerte Reinigungsschritte.

Aliphatische oder aromatische Lactone sind cyclische Verbindungen enthaltend eine Esterbindung im Ring. Bevorzugte Verbindungen sind 4-gliedrige Ringlactone wie β-Propiolacton, β-Butyrolacton, β-Isovalerolacton, β-Caprolacton, β-Isocaprolacton, β-Methyl-β-valerolacton, 5-gliedrige Ringlactone, wie γ-Putyrolacton, γ-Valerolacton, 5-Methylfuran-2(3H)-on, 5-Methylidenedihydrofuran-2(3H)-on, 5-Hydroxyfuran-2(5H)-on, 2-Benzofuran-1(3H)-on und 6-Methy-2-benzofuran-1(3H)-on, 6-gliedrige Ringlactone, wie δ-Valerolacton, 1,4-Dioxan-2-on, Dihydrocumarin, 1H-Isochromen-1-on, 8H-pyrano[3,4-b]pyridine-8-on, 1,4-Dihydro-3H-isochromen-3-on, 7,8-Dihydro-5H-pyrano[4,3-b]pyridine-5-on, 4-Methyl-3,4-dihydro-1H-pyrano[3,4-b]pyridine-1 -on, 6-Hydroxy-3,4-dihydro-1H-isochromen-1-on, 7-Hydroxy-3,4-dihydro-2H-chromen-2-on, 3-Ethyl-1H-isochromen-1-on, 3-(Hydroxymethyl)-1H-isochromen-1-on, 9-Hydroxy-1H,3H-benzo[de]isochromen-1-on, 6,7-Dimethoxy-1,4-dihydro-3H-isochromen-3-on und 3-Phenyl-3,4-dihydro-1H-isochromen-1-on, 7-gliedrige Ringlactone, wie ε-Caprolacton, 1,5-Dioxepan-2-on, 5-Methyloxepan-2-on, Oxepane-2,7-dion, thiepan-2-on, 5-Chlorooxepan-2-on, (4S)-4-(Propan-2-yl)oxepan-2-on, 7-Butyloxepan-2-on, 5-(4-Aminobuthyl)oxepan-2-on, 5-Phenyloxepan-2-on, 7-Hexyloxepan-2-on, (5S,7S)-5-Methyl-7-(propan-2-yl)oxepan-2-on, 4-Methyl-7-(propan-2-yl)oxepan-2-on, und höhergliedrige Ringlactone, wie (7E)-Oxacycloheptadec-7-en-2-on.

Lactide sind cyclische Verbindungen enthaltend zwei oder mehr Esterbindungen im Ring. Bevorzugte Verbindungen sind Glycolid (1,4-Dioxan-2,5-dion), L-Lactid (L-3,6-Dimethyl-1,4-dioxan-2,5-dion), D-Lactid, DL-Lactid, Mesolactid und 3-Methyl-1,4-dioxan-2,5-dion, 3-Hexyl-6-methyl-1,4-dioxane-2,5-dione, 3,6-Di(but-3-en-1-yl)-1,4-dioxane-2,5-dion (jeweils einschließlich optisch aktiver Formen). Besonders bevorzugt ist L-Lactid.

Als cyclische Carbonate werden vorzugsweise Verbindungen mit mindestens drei gegebenenfalls substituierten Methylengruppen zwischen den Sauerstoffatomen der Carbonatgruppe eingesetzt. Bevorzugte Verbindungen sind Trimethylencarbonat, Neopentylglykolcarbonat (5,5-Dimethyl-1,3-dioxan-2-on), 2,2,4-Trimethyl-1,3-pentandiolcarbonat, 2,2-Dimethyl-1,3-butandiolcarbonat, 1,3-Butandiolcarbonat, 2-Methyl-1,3-propandiolcarbonat, 2,4-Pentandiolcarbonat, 2-Methyl-butan-1,3-diolcarbonat, TMP-Monoallylethercarbonat, Pentaerythritdiallylethercarbonat, 5-(2-Hydroxyethyl)-1,3-dioxan-2-on, 5-[2-(Benzyloxy)ethyl]-1,3-dioxan-2-on, 4-Ethyl-1,3-dioxolan-2-on, 1,3-Dioxolan-2-on, 5-Ethyl-5-methyl-1,3-dioxan-2-on, 5,5-Diethyl-1,3-dioxan-2-on, 5-Methyl-5-propyl-1,3-dioxan-2-on, 5-(Phenylamino)-1,3-dioxan-2-on und 5,5-Dipropyl-1,3-dioxan-2-on. Besonders bevorzugt sind Trimethylencarbonat und Neopentylglykolcarbonat.

Cyclische Carbonate mit weniger als drei gegebenenfalls substituierten Methylengruppen zwischen den Sauerstoffatomen der Carbonatgruppe werden unter den Bedingungen des erfindungsgemäßen Verfahrens zur Copolymerisation von Alkylenoxiden und $CO_2$ nicht oder nur zu einem geringen Anteil in die Polymerkette eingebaut.

Cyclische Carbonate mit weniger als drei gegebenenfalls substituierten Methylengruppen zwischen den Sauerstoffatomen der Carbonatgruppe können jedoch gemeinsam mit anderen Suspensionsmitteln eingesetzt werden. Bevorzugte cyclische Carbonate mit weniger als drei gegebenenfalls substituierten Methylengruppen zwischen den Sauerstoffatomen der Carbonatgruppe sind Ethylencarbonat, Propylencarbonat, 2,3-Butandiolcarbonat, 2,3-Pentandiolcarbonat, 2-Methyl-1,2-propandiolcarbonat, 2,3-Dimethyl-2,3-butandiolcarbonat.

Cyclische Anhydride sind cyclische Verbindungen enthaltend eine Anhydridgruppe im Ring. Bevorzugte Verbindungen sind Succinsäureanhydrid, Maleinsäureanhydrid, Phthalsäureanhydrid, 1,2-Cyclohexandicarbonsäureanhydrid, Diphensäureanhydrid, Tetrahydrophthalsäureanhydrid, Methyltetrahydrophthalsäureanhydrid, Norbornendisäureanhydrid und ihre Chlorierungsprodukte, Bernsteinsäureanhydrid, Glutarsäureanhydrid, Diglykolsäureanhydrid, 1,8-Naphthalsäureanhydrid, Bernsteinsäureanhydrid, Dodecenylbernsteinsäureanhydrid, Tetradecenylbernsteinsäureanhydrid, Hexadecenylbernsteinsäureanhydrid, Octadecenylbernsteinsäureanhydrid, 3- und 4-Nitrophthalsäureanhydrid, Tetrachlorphthalsäureanhydrid, Tetrabromphthalsäureanhydrid, Itaconsäureanhydrid, Dimethylmaleinsäureanhydrid, Allylnorbornendisäureanhydrid, 3-Methylfuran-2,5-dion, 3-Methyldihydrofuran-2,5-dion, Dihydro-2H-pyran-2,6(3H)-dion, 1,4-Dioxane-2,6-dion, 2H-Pyran-2,4,6(3H,5H)-trion, 3-Ethyldihydrofuran-2,5-dion, 3-Methoxydihydrofuran-2,5-dion, 3-(Prop-2-en-1-yl)dihydrofuran-2,5-dion, N-(2,5-Dioxotetrahydrofuran-3-yl)formamid und 3[(2E)-But-2-en-1-yl]dihydrofuran-2,5-dion. Besonders bevorzugt sind Succinsäureanhydrid, Maleinsäureanhydrid und Phthalsäureanhydrid.

Isocyanatgruppen-haltige Verbindung (B-1)

Geeignete Polyisocyanate der Isocyanatgruppen-haltige Verbindung (B-1) sind die dem Fachmann an sich bekannten aromatischen, araliphatischen, aliphatischen oder cycloaliphatischen Polyisocyanate, welche auch Iminooxadiazindion-, Isocyanurat-, Uretdion-, Urethan-, Allophanat-, Biuret-, Harnstoff-, Oxadiazintrion, Oxazolidinon-, Acylharnstoff-, Carbamat- und/oder Carbodiimid-Strukturen aufweisen können. Diese können in B einzeln oder in beliebigen Mischungen untereinander eingesetzt werden.

Die vorstehend genannten Polyisocyanate basieren dabei auf dem Fachmann an sich bekannten Diisocyanaten oder Triisocyanaten oder höher funktionellen Isocyanaten mit aliphatisch, cycloaliphatisch, araliphatisch und/oder aromatisch gebundenen Isocyanatgruppen, wobei es unerheblich ist, ob diese unter Verwendung von Phosgen oder nach phosgenfreien Verfahren hergestellt wurden. Beispiele für solche Diisocyanate oder Triisocyanate oder höher funktionellen Isocyanaten sind 1,4-Diisocyanatobutan, 1,5-Diisocyanatopentan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan (Desmodur® W, Covestro AG, Leverkusen, DE), 4-Isocyanatomethyl-1,8-octandiisocyanat (Triisocyanatononan, TIN), ω,ω'-Diisocyanato-1,3-dimethylcyclohexan ($H_6XDI$), 1-Isocyanato-1-methyl-3-isocyanato-methylcyclohexan, 1-Isocyanato-1-methyl-4-isocyanato-methylcyclohexan, Bis-(isocyanatomethyl)-norbornan, 1,5-Naphthalen-diisocyanat, 1,3- und 1,4-Bis-(2-isocyanatoprop-2-yl)-benzol (TMXDI), 2,4- und 2,6-Diisocyanatotoluol (TDI) insbesondere das 2,4 und das 2,6-Isomere und technische Gemische der beiden Isomeren, 2,4'- und 4,4'-Diisocyanatodiphenylmethan (MDI), 1,5-Diisocyanatonaphthalin, 1,3-Bis(isocyanato-methyl)benzol (XDI) sowie beliebige Mischungen genannter Verbindungen, sowie durch Dimerisierung oder Trimerisierung oder höhere Oligomerisierung der genannten Isocyanate erhaltene polyfunktionelle Isocyanate, enthaltend Isocyanurat-Ringen, Iminooxadiazindion-Ringe, Uretdion-Ringe, Urethoniminringe, sowie durch Addukt-Bildung der genannten Isocyanate an Mischungen verschiedener mehr als difunktioneller Alkohole, wie TMP, TME oder Pentaerythrit, gewonnene polyfunktionelle Isocyanate.

Bevorzugt weisen die Verbindungen der Isocyanatgruppen-haltige Verbindung (B-1) dabei einen Gehalt an Isocyanatgruppen von 2 Gew.-% bis 60 Gew.-%, bevorzugt von 15 Gew.-% bis 50 Gew.-%.

Besonders bevorzugt werden in Isocyanatgruppen-haltige Verbindung (B-1) Polyisocyanate oder Polyisocyanatgemische der vorstehend genannten Art mit ausschließlich aliphatisch, cycloaliphatische und/oder aromatisch gebundenen Isocyanatgruppen eingesetzt.

Ganz besonders bevorzugt enthält die Isocyanatgruppen-haltige Verbindung (B-1) ausgewählt aus der Gruppe bestehend aus HDI, MDI, TDI, NDI, deren Trimerisierungs- oder höheren Oligomerisierungsprodukte und/oder deren Addukte.

Die erfindungsgemäßen Isocyanatgruppen-haltige Verbindungen (B-1) haben eine durchschnittliche NCO-Funktionalität (d.h. durchschnittliche Anzahl von NCO-Gruppen pro Molekül) von 1,5 bis 10, bevorzugt von $\geq 2{,}0$ bis $\leq 4{,}0$.

Radikalstarter (C)

Gemäß der gängigen fachlichen Definition sind unter Radikalstartern chemische Verbindungen zu verstehen, welche durch thermolytische oder photolytische Spaltung Initiatorn, bevorzugt Radikale bilden, welche die radikalische Reaktion, beispielsweise die Polymerisation oder Vernetzung, initialisieren.

Peroxid (C-1)

In einer bevorzugten Ausführungsform des erfindungsgemäßen Verfahrens werden Peroxide verwendet. Hierunters sind nach der allgemeinen fachlichen Definition Verbindungen zu verstehen, die das Peroxidanion ($O_2^{2-}$) oder eine Peroxygruppe (-O-O-) enthalten, wobei der Sauerstoff in diesen Verbindungen eine formale Oxidationszahl von minus eins hat.

Die Gruppe peroxidischer Verbindungen kann in anorganische und organische Peroxide unterteilt werden, wobei die anorganischen Peroxide oftmals salzartigen Charakter besitzen, die organischen Peroxide hingegen kovalent gebundene Peroxygruppen tragen. Die Sauerstoff-Sauerstoff-Bindung von Peroxiden ist labil und neigt zur homolytischen Spaltung unter Bildung reaktiver Radikale.

Beispiele für anorganische Peroxide sind Wasserstoffperoxid, Peroxoborate, Peroxocarbonate, Peroxochlorate, Peroxodiphosphate, Peroxodiphosphorsäure, Peroxodischwefelsäure, Peroxodisulfate, Peroxodisulfuryldifluorid, Peroxohyponitrite, Peroxokohlensäure, Peroxonitrate, Peroxomolydate, Peroxomonophosphate, Peroxomonophosphorsäure, Peroxosalpetersäure, Peroxomonoschwefelsäure, Peroxomomosulfate, Peroxowolframate Beispielhaft für organische Peroxide seien Perester und Hydroperoxid genannt.

In einer bevorzugten Ausführungsform des erfindungsgemäßen Verfahrens wird das mindestens eine Peroxid ausgewählt aus der Gruppe bestehend aus Dibenzoylperoxid, Dilauroylperoxid, Acetylacetonperoxid, Cyclohexanonperoxid, Methylethylketonperoxid, Methylisobutylketonperoxid, Cumolhydroperoxid, tert.-Butylhydroperoxid, Di-(2-tert.-butyl-peroxyisopropyl)-benzen, tert.-Butylcumylperoxid, Di-tert.amylperoxid, Di-tert.-butylperoxid, Dicumylperoxid, 2,5-Dimethyl-2,5-di-(tert.-butylperoxy)-hexan, 1,1-Di-(tert.-butylperoxy)-3,3,5-trimethylcyclohexan, 1,1-Di-(tert.-butylperoxy)-cyclohexan, 2,5-Dimethyl-2,5-di(2-ethylhexanoylperoxy)-hexan, tert.-Butyl-peroxy-benzoat, tert.-Butylperoxy-3,5,5-trimethylhexanoat, tert.-Butylperoxy-2-ethylhexanoat, tert.-Butylmonoperoxymaleat, Di-(4-tert.-butyl-cyclohexyl)-peroxydicarbonat, tert.-Butylperoxy-2-ethylhexylcarbonat, tert.-Butylperoxyisopropylcarbonat, 1,3 1,4-Bis(tert-butylperoxyisopropyl)benzene, t-Butyl Cumyl Peroxide, 2,5-Di(t-butylperoxy)-2,5-dimethylhexane, n-Butyl-4,4'-di(t-butylperoxy)valerate, 1,1'-Di-(tert-butylperoxy)-3,3,5-trimethylcyclohexan, Di-(2,4-dichlorobenzoyl)-peroxid, tert.-Butylperoxybenzoat, Butyl-4,4-di-(tert.-butylperoxy) valerat, 2,5-Dimethyl-2,5-di(tert.-butylperoxy)hexyn-3, 2,2'-Azodiisobutyronitril und Di-tert-Butylperoxid.

In einer besonders bevorzugten Ausführungsform des erfindungsgemäßen Verfahrens wird das mindestens eine Peroxid ausgewählt aus der Gruppe bestehend aus 1,1'-Di-(tert-butylperoxy)-3,3,5-trimethylcyclohexan, Di-tert-Butylperoxid, und tert.-Butylperoxybenzoat.

Katalysator (D)

Zur Umsetzung der Polyolkomponente (A), enthaltend mindestens ein Kohlenstoff-Kohlenstoff Doppelbindungen enthaltendes Polyethercarbonatpolyol (A-1), mit einer Isocyanatkomponente (B-1) enthaltend NCO-Gruppen zu einem Polyurethan wird mindestens ein Katalysator (D) hinzugegeben.

In einer Ausgestaltung des erfindungsgemäßen Verfahrens wird in Schritt i) mindestens ein Katalysator (D) für die Reaktion der Polyolkomponente (A) mit einer Isocyanatgruppen-haltigen Komponente (B-1) enthaltend terminale NCO-Gruppen zugegeben.

Solche Katalysatoren (D) sind dem Fachmann bekannt.

Als Katalysatoren (D) werden bevorzugt eingesetzt: aliphatische tertiäre Amine (beispielsweise Trimethylamin, Tetramethylbutandiamin, 3-Dimethylaminopropylamin, N,N-Bis(3-dimethylaminopropyl)-N-isopropanolamin), cycloaliphatische tertiäre Amine (beispielsweise 1,4-Diaza(2,2,2)bicyclooctan), aliphatische Aminoether (beispielsweise Bisdimethylaminoethylether, 2-(2-Dimethylaminoethoxy)ethanol und N,N,N-Trimethyl-N-hydroxyethyl-bisaminoethylether), cycloaliphatische Aminoether (beispielsweise N-Ethylmorpholin), aliphatische Amidine, cyclo aliphatische Amidine, Harnstoff und Derivate des Harnstoffs (wie beispielsweise Aminoalkylharnstoffe, siehe zum Beispiel EP-A0 176 013, insbesondere (3-Dimethylaminopropylamin)-harnstoff). Als Katalysatoren (D) können auch Zinn(II)-Salze von Carbonsäuren eingesetzt werden, wobei vorzugsweise die jeweils zugrundeliegende Carbonsäure von 2 bis 20 Kohlenstoffatome aufweist. Besonders bevorzugt sind das Zinn(II)-Salz der 2-Ethylhexansäure (d.h. Zinn(II)-(2-ethylhexanoat)), das Zinn(II)-Salz der 2-Butyloctansäure, das Zinn(II)-Salz der 2-Hexyldecansäure, das Zinn(II)-Salz der Neodecansäure, das Zinn(II)-Salz der Ölsäure, das Zinn(II)-Salz der Ricinolsäure und Zinn(II)laurat. Es können auuch Zinn(IV)-Verbindungen, wie z.B. Dibutylzinnoxid, Dibutylzinndichlorid, Dibutylzinndiacetat, Dibutylzinndilaurat, Dibutylzinnmaleat oder

Dioctylzinndiacetat als Katalysatoren (D) eingesetzt werden. Selbstverständlich können alle genannten Katalysatoren (D) auch als Gemische eingesetzt werden.

Als Katalysatoren (D) können auch zinnfreie Organometallverbindungen verwendet werden. Beispiele hierfür die gemäß dem Stand der Technik bekannten und üblichen organischen Metallverbindungen wie Titanverbindungen, Eisenverbindungen, Zinkverbindungen oder Bismutverbindungen. Besonders bevorzugt als zinnfreie Organometallverbindungen können Hexansäure, 2-Ethyl-, Zinksalz, basisch (OMG Borchers GmbH, Langenfeld, Borchi KAT 22), Titaniumacetylacetonat (Tyzor AA 105), Titantetrabutanolat (Tyzor TBT), Bismut-2-ethylhexanoat (Borchi KAT 320) und und/oder win Gemisch aus Bismuth-2-ethylhexanoat und Zink-2-ethylhexanoat (Borchi KAT 0244) als Katalysatoren (D) eingesetzt werden. Selbstverständlich können alle genannten Katalysatoren (D) auch als Gemische eingesetzt werden.

Weitere Vertreter von zu verwendenden Katalysatoren (D) sowie Einzelheiten über die Wirkungsweise der Katalysatoren (D) sind im Vieweg und Höchtlen (Hrsg.): Kunststoff-Handbuch, Band VII, Carl-Hanser-Verlag, München 1966, S. 96 -102 sowie Henri Ulrich, "Chemistry and Technology of Isocyanates", John Wiley & Sons, Chichester, New York, Brisane, Toronto, Singapore, 1996, reprinted in 2001, Seiten 98ff. beschrieben.

Die Katalysatoren (D) werden in der Regel in Mengen von etwa 0,001 bis 10 Gew.-%, bezogen auf die Gesamtmenge an Verbindungen mit mindestens zwei gegenüber Isocyanaten reaktionsfähigen Wasserstoffatomen eingesetzt.

In einer weiteren Ausführungsform des erfindungsgemäßen Verfahrens wird Schritt i) bei Temperaturen von 20 °C bis 200 °C, bevorzugt von 60 °C bis 160 °C durchgeführt.

In einer weiteren Ausführungsform des erfindungsgemäßen Verfahrens wird Schritt ii) bei Temperaturen von 20 °C bis 200 °C, bevorzugt von 60 °C bis 160 °C durchgeführt.

Ein weiterer Gegenstand der Erfindung ist ein Elastomer, bevorzugt ein Polyurethan-haltiges Elastomer, erhältlich oder erhalten durch eines der auf den vorherigen Seiten offenbarten Verfahren.

In einer weiteren Ausführungsform wird das Elastomer, bevorzugt das Polyurethan-haltige Elastomer, als Kautschuk, Dichtmasse, Dichtungen Klebstoff, Lack oder als Formkörper beispielsweise für Dämpfer Dämpferelemente oder Schläuche verwendet.

Ein weiterer Gegenstand der Erfindung ist ein Zwei-Komponenten-System, umfassend eine Polyolkomponente (A), enthaltend mindestens ein Kohlenstoff-Kohlenstoff Doppelbindungen enthaltendes Polyethercarbonatpolyol (A-1), und eine Isocyanatkomponente (B-1) enthaltend NCO-Gruppen, wobei das molare Verhältnis der NCO-Gruppen der Isocyanatkomponente (B-1) zu den OH-Gruppen der Polyolkomponente (A) von größer als 1,0 ist, wobei in Komponente (A) und/oder in Komponente (B-1) mindestens ein Radikalstarter (C), bevorzugt mindestens ein Peroxid (C-1) enthalten ist. Bevorzugt ist das mindestens eine Peroxid (C-1) in der Komponente (A) enthalten.

In einer Ausführungsform des Zwei-Komponenten-Systems beträgt der Gehalt an Kohlenstoff-Kohlenstoff Doppelbindungen im mindestens einen Polyethercarbonatpolyol (A-1) des Zwei-Komponenten-Systems von 0,5 Gew.-% bis 17,0 Gew.-%, bevorzugt 1,0 Gew.-% bis 6,0 Gew.-%.

Der Gehalt an Kohlenstoff-Kohlenstoff Kohlenstoff-Kohlenstoff Doppelbindungen, im Polyethercarbonatpolyol ergibt sich für das Kohlenstoff-Kohlenstoff Doppelbindungen, enthaltende Polyethercarbonatpolyol als der Quotient des angegebenen Doppelbindungsgehalts der eingesetzten Polyethercarbonatpolyole angegeben in $C_2H_2$ Äquivalenten pro Masse Gesamtmasse des Polyethercarbonatpolyols und ist in $C_2H_2$ Äquivalenten pro Masse Polyethercarbonatpolyol angegeben.

In einer Ausführungsform des Zwei-Komponenten-Systems ist der mindestens eine Katalysator (D) in Komponente (A) und/oder in Komponente (B-1), bevorzugt in Komponente (B-1), enthalten.

In einer alternativen Ausführungsform der Erfindung ist besteht ein weiteres Zwei-Komponenten-System, umfassend eine Polyolkomponente (A), enthaltend mindestens ein Kohlenstoff-Kohlenstoff Doppelbindungen enthaltendes Polyethercarbonatpolyol (A-1) sowie eine Isocyanatkomponente (B-1) enthaltend NCO-Gruppen, wobei das molare Verhältnis der NCO-Gruppen der Isocyanatkomponente (B-1) zu den OH-Gruppen der Polyolkomponente (A) von größer als 1,0 ist als Komponente 1, und mindestens ein Radikalstarter (C), bevorzugt mindestens ein Peroxid (C-1) enthalten ist als Komponente 2.

In einer Ausführungsform des Zwei-Komponenten-Systems ist der mindestens eine Katalysator (D) in Komponente 1 und/oder in Komponente 2 enthalten.

In einer ersten Ausführung betrifft die Erfindung ein Verfahren zur Herstellung eines Polyurethan-haltigen Elastomers durch Umsetzung einer Polyolkomponente (A), enthaltend mindestens ein Kohlenstoff-Kohlenstoff Doppelbindungen enthaltendes Polyethercarbonatpolyol (A-1) einer Isocyanatkomponente (B-1) enthaltend NCO-Gruppen, in Gegenwart eines Radikalstarters (C), bevorzugt mindestens einem Peroxid (C-1), und optional eines Katalysators (D), wobei das molare Verhältnis der NCO-Gruppen der Isocyanatkomponente (B-1), zu den OH-Gruppen der Kohlenstoff-Kohlenstoff Doppelbindungen enthaltenden Polyolkomponente (A) größer als 1,0 ist.

In einer dritten Ausführung betrifft die Erfindung ein Verfahren gemäß der ersten oder zweiten Ausführung, wobei der Radikalstarter (C) mindestens ein Peroxid (C-1) ist, und das mindestens eine Peroxid ausgewählt wird aus der Gruppe bestehend aus Dibenzoylperoxid, Dilauroylperoxid, Acetylacetonperoxid, Cyclohexanonperoxid, Methylethylketonperoxid, Methylisobutylketonperoxid, Cumolhydroperoxid, tert.-Butylhydroperoxid, Di-(2-tert.-butyl-peroxyisopropyl)-benzen, tert.-Butylcumylperoxid, Di-tert.amylperoxid, Di-tert.-butylperoxid, Dicumylperoxid, 2,5-Dimethyl-2,5-di-(tert.-butylperoxy)-hexan, 1,1-Di-(tert.-butylperoxy)-3,3,5-trimethylcyclohexan, 1,1-Di-(tert.-butylperoxy)-cyclohexan, 2,5-Dimethyl-2,5-di(2-ethylhexanoylperoxy)-hexan, tert.-Butyl-peroxy-benzoat, tert.-Butylperoxy-3,5,5-trimethylhexanoat, tert.-Butylperoxy-2-ethylhexanoat, tert.-Butylmonoperoxymaleat, Di-(4-tert.-butyl-cyclohexyl)-peroxydicarbonat, tert.-Butylperoxy-2-ethylhexylcarbonat, tert.-Butylperoxyisopropylcarbonat, 1,3 1,4-Bis(tert-butylperoxyisopropyl)benzene, t-Butyl Cumyl Peroxide, 2,5-Di(t-butylperoxy)-2,5-dimethylhexane, n-Butyl-4,4'-di(t-butylperoxy)valerate, 1,1'-Di-(tert-butylperoxy)-3,3,5-trimethylcyclohexan, Di-(2,4-dichlorobenzoyl)-peroxid, tert.-Butylperoxybenzoat, Butyl-4,4-di-(tert.-butylperoxy) valerat, 2,5-Dimethyl-2,5-di(tert.-butylperoxy)hexyn-3, 2,2'-Azodiisobutyronitril und Di-tert-Butylperoxid.

In einer vierten Ausführung Verfahren gemäß einem der ersten bis dritten Ausführungsform, wobei das Kohlenstoff-Kohlenstoff Doppelbindungen enthaltende Polyethercarbonatpolyol (A-1) einen Gehalt an Kohlenstoff-Kohlenstoff Doppelbindungen von 0,5 Gew.-% bis 17,0 Gew.-%, bevorzugt von 1,0 Gew.-% bis 6,0 Gew.-% aufweist.

In einer fünften Ausführung betrifft die Erfindung ein Verfahren gemäß der ersten bis vierten Ausführungsform, wobei das Kohlenstoff-Kohlenstoff Doppelbindungen enthaltende Polyethercarbonatpolyol (A-1) einen $CO_2$ Anteil von 0,5 Gew.-% bis 50 Gew.-%, bevorzugt von 5 Gew.-% bis 25 Gew.-%, aufweist.

In einer sechsten Ausführung betrifft die Erfindung ein Verfahren gemäß einem der ersten bis fünften Ausführungsform, wobei das Kohlenstoff-Kohlenstoff Doppelbindungen enthaltende Polyethercarbonatpolyol (A-1) erhältlich ist durch Anlagerung eines Alkylenoxids, mindestens eines Kohlenstoff-Kohlenstoff Doppelbindungshaltigen Monomers und $CO_2$ an eine H-funktionelle Starterverbindung in Gegenwart eines Doppelmetallcyanidkatalysators.

In einer siebten Ausführung betrifft die Erfindung ein Verfahren gemäß einem der ersten bis sechsten Ausführungsform, wobei das mindestens eine Kohlenstoff-Kohlenstoff Doppelbindungshaltige Monomer ausgewählt wird aus mindestenes einem der Monomere aus einer oder mehrerer der Gruppen bestehend aus

(a) Allylglycidylether, Vinylcyclohexenoxid, Cyclooctadienmonoepoxid, Cyclododecatrienmonoepoxid, Butadienmonoepoxid, Isoprenmonoepoxid, Limonenoxid, 1,4-Divinylbenzolmonoepoxid, 1,3-Divinylbenzolmonoepoxid, Glycidylester ungesättigter Fettsäuren, teilweise epoxidierte Fette und Öle und/oder deren Mischungen
(b) Alkylenoxid mit Doppelbindung der allgemeinen Formel (IX) ist:

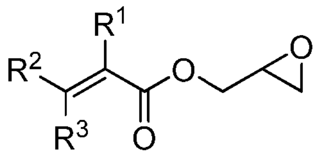
(IX)

wobei $R_1$ bis $R_3$ unabhängig voneinander H, Halogen, substituierte oder nicht-substituierte C1-C22-Alkyl, substituierte oder nicht-substituierte C6-C12 Aryl sind
(c) cyclisches Anhydrid der Formel (X), (XI) oder (XII) entspricht:

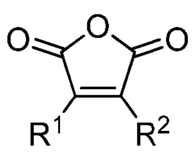
(X)

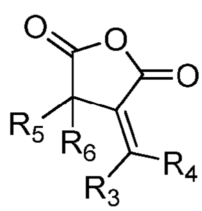
(XI)

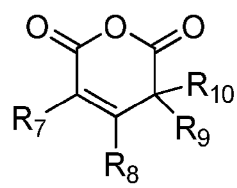
(XII)

,

wobei $R_1$ bis $R_{10}$ unabhängig voneinander H, Halogen, substituierte oder nicht-substituierte C1-C22-Alkyl, substituierte oder nicht-substituierte C6-C12 Aryl sind,
und
(d) 4-Cyclohexen-1,2-disäureanhydrid, 4-Methyl-4-cyclohexen-1,2-disäureanhydrid, 5,6-Norbornen-2,3-disäureanhydrid, Allyl-5,6-norbornen-2,3-disäureanhydrid, Dodecenylbernsteinsäureanhydrid, Tetradecenylbernsteinsäureanhydrid, Hexadecenyl-bernsteinsäureanhydrid und Octadecenylbernsteinsäureanhydrid.

In einer achten Ausführung betrifft die Erfindung ein Verfahren gemäß der siebten Ausführungsform, wobei

das mindestens eine, mindestens das eine Kohlenstoff-Kohlenstoff Doppelbindungen enhaltende Monomere ausgewählt wird aus einer oder mehrerer der Gruppen bestehend aus

(a) Allylglycidylether, Vinylcyclohexenoxid und Limonenoxid
(b) Glycidylacrylat und Glycidylmethacrylat,
(c) Maleinsäureanhydrid und Itaconsäureanhydrid
und
(d) 4-Cyclohexen-1,2-disäureanhydrid und 5,6-Norbornen-2,3-disäureanhydrid

In einer neunten Ausführung betrifft die Erfindung ein Verfahren gemäß einer der ersten bis Ausführungsform, wobei als Isocyanatgruppen-haltige Komponente (B-1) aliphatische, cycloaliphatische und/oder aromatische Isocyanate, bevorzugt HDI, MDI, TDI, NDI deren Trimerisierungs- oder höheren Oligomerisierungsprodukte und/oder deren Addukte enthält.

In einer zehnten Ausführung betrifft die Erfindung ein Verfahren gemäß einer der ersten bis neunten Ausführungsform, einem der vorherigen Ansprüche, umfassend die folgenden Schritte:

i) Umsetzung einer Polyolkomponente (A), enthaltend mindestens ein Kohlenstoff-Kohlenstoff Doppelbindungen enthaltendes Polyethercarbonatpolyol (A-1) mit einer Isocyanatkomponente (B-1) enthaltend NCO-Gruppen, zu einem Polyurethan optional in gegenwart eines Katalysators (D),

ii) Vernetzung des in i) erhaltenden Polyurethans, in Gegenwart von mindestens einem Radikalstarter (C), bevorzugt mindestens einem Peroxid (C-1).

In einer elften Ausführung betrifft die Erfindung ein Verfahren gemäß der zehnten Ausführungsform, wobei in Schritt i) mindestens ein Katalysator (D) für die Reaktion der Polyolkomponente (A) mit einer Isocyanatgruppen-haltigen Komponente (B-1) enthaltend terminale NCO-Gruppen zugegeben wird.

In einer zwölften Ausführung betrifft die Erfindung ein Verfahren gemäß der zehnten oder elften Ausführungsform, wobei in Schritt i) bei Temperaturen von 20 °C bis 200°C, bevorzugt von 60 °C bis 160 °C durchgeführt wird.

In einer dreizehnten Ausführung betrifft die Erfindung ein Verfahren gemäß einer der zehnten bis zwölften Ausführungsform, wobei in Schritt ii) bei Temperaturen von 20 °C bis 200°C, bevorzugt von 60 °C bis 160 °C durchgeführt wird.

In einer vierzehnten Ausführung betrifft die Erfindung ein Verfahren gemäß einer der ersten bis neunten Ausführungsform, umfassend die folgenden Schritte:

(iii) Umsetzung einer Polyolkomponente (A), enthaltend mindestens ein Kohlenstoff-Kohlenstoff Doppelbindungen enthaltendes Polyethercarbonatpolyol (A-1) mit mindestens einem Radikalstarter (C), bevorzugt mindestens einem Peroxid (C-1)
(iv) Umsetzung des in Schritt (iii) erhaltenden Produkts mit einer Isocyanatkomponente (B-1) enthaltend NCO-Gruppen optional in Gegenwart eines Katalysators (D).

In einer fünfzehnten Ausführung betrifft die Erfindung ein Polyurethan-haltiges Elastomer, erhältlich oder erhalten durch ein Verfahren gemäß einer der ersten bis vierzehnten Ausführungsform.

In einer sechszehnten Ausführung betrifft die Erfindung die Verwendung des Polyurethan-haltigen Elastomers gemäß der fünfzehnten Ausführungsform, wobei das Polyurethan-haltige Elastomer, als Kautschuk, Dichtmasse, Dichtungen, Klebstoff, Lack oder als Formkörper beispielsweise für Dämpfer, Dämpferelemente oder Schläuche verwendet wird.

In einer siebzehnten Ausführung betrifft die Erfindung ein Zwei-Komponenten-System, umfassend eine Polyolkomponente (A), enthaltend mindestens ein Kohlenstoff-Kohlenstoff Doppelbindungen enthaltendes Polyethercarbonatpolyol (A-1), und eine Isocyanatkomponente (B-1) enthaltend NCO-Gruppen, wobei das molare Verhältnis der NCO-Gruppen der Isocyanatkomponente (B-1) zu den OH-Gruppen der Polyolkomponente (A) von größer als 1,0 ist, wobei in Komponente (A) und/oder in Komponente (B-1) mindestens ein Radikalstarter (C), bevorzugt mindestens ein Peroxid (C-1), enthalten ist ist und wobei die Isocyanatkomponente (B-1) eine durchschnittliche NCO-Funktionalität von 1,5 bis 10 hat.

In einer achtzehnten Ausführung betrifft die Erfindung ein Zwei-Komponenten-System gemäß der siebzehnten Ausfürungsform, wobei in Komponente (A) und/oder in Komponente (B-1) mindestens ein Katalysator (D) enthalten ist.

In einer neunzehnten Ausführung betrifft die Erfindung ein Verfahren gemäß der achten Ausführungsform, wobei das mindestens eine Kohlenstoff-Kohlenstoff Doppelbindungen enhaltende Monomer Maleinsäureanhydrid ist.

## Beispiele

Die vorliegende Erfindung wird anhand der nachfolgenden Beispiele näher beschrieben, ohne jedoch darauf beschränkt zu sein.

### Einsatzstoffe

*H-funktionelle Starterverbindungen*

Glycerin Sigma Aldrich, Reinheit 99,5 %,

*Alkylenoxide*

PO Propylenoxid der Firma Chemgas, Reinheit > 99 %

*Anhydride*

MSA Maleinsäureanhydrid der Firma Sigma Aldrich, Reinheit > 99 %

*Isocyanatkomponente (B-1)*

MDI-Trimer Isocyanat: Desmodur® VL R 10, NCO-Gehalt: 31,7 (Covestro AG, Leverkusen)

*Weitere Chemikalien*

cPC 4-Methyl-2-oxo-1,3-dioxolan (cPC), 98 %, Acros Chemicals

$H_3PO_4$ Phosphorsäure ($H_3PO_4$), 85 %, wässrige Lösung, Fluka

*DMC-Katalysator*

DMC Als DMC-Katalysator wurde bei allen Beispielen DMC-Katalysator hergestellt gemäß Beispiel 6 in WO 2001/80994 A1 eingesetzt.

*Peroxid (C-1)*

Peroxid: 1,1'-Di-(tert-butylperoxy)-3,3,5-trimethylcyclohexane,75% sol.in arom.free min.spirit (Acros Oranics, Geel, Belgien)

*Katalysator (D)*

Borchi KAT 22 (Hexansäure, 2-Ethyl-, Zinksalz, basisch) (OMG Borchers GmbH, Langenfeld)

### Methoden

Die chemische Charakterisierung der eingesetzten Polyethercarbonatpolyole erfolgte durch $^1$H-NMR Spektroskopie. Dazu wurde jeweils eine Probe der gereinigten Reaktionsmischung in deuteriertem Chloroform gelöst und auf einem Spektrometer der Firma Bruker (AV400, 400 MHz) vermessen.

Bei der Terpolymerisation von Propylenoxid, mindestens zweier ungesättigter Verbindungen und $CO_2$ resultiert neben dem cyclischen Propylencarbonat das Polyethercarbonatpolyol mit ungesättigten Gruppen, welches einerseits in Formel (VIIIa) gezeigte Polycarbonat-Einheiten enthält,

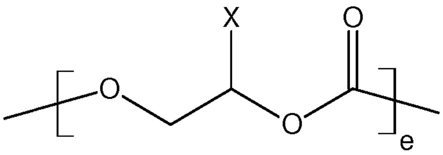 bzw. 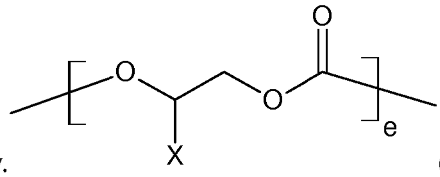 (XIIIa)

und andererseits in Formel (XIIIb) gezeigte Polyether-Einheiten enthält:

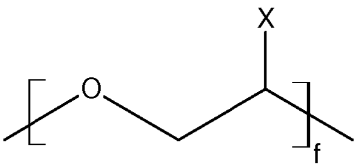 bzw. 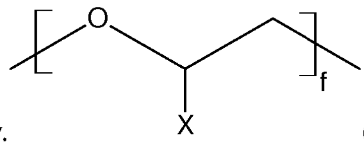 (XIIIb).

Das Verhältnis der Menge an cyclischem Propylencarbonat zu Polyethercarbonatpolyol (Selektivität; Verhältnis g/e) sowie der Anteil der nicht umgesetzten Monomere (Propylenoxid $R_{PO}$, Allylglycidylether $A_{Doppelbindung}$ in mol%, Maleinsäureanhydrid $B_{Doppelbindung}$ in mol%) wurden mittels $^1$H-NMR Spektroskopie bestimmt.

Die relevanten Resonanzen im $^1$H-NMR Spektrum (bezogen auf TMS = 0 ppm), die zur Integration verwendet wurden, sind in Tabelle 1 zusammengefasst:

Tabelle 1: Resonanzen im $^1$H-NMR Spektrum

| Signal | Verschiebung in ppm | Bezeichnung | Fläche entspricht Anzahl H-Atomen |
|---|---|---|---|
| I1 | 1,10 - 1,17 | $CH_3$-Gruppe der Polyether-Einheiten | 3 |
| I2 | 1,25 - 1,34 | $CH_3$-Gruppe der Polycarbonat-Einheiten | 3 |
| I3 | 1,45 - 1,48 | $CH_3$-Gruppe des cyclischen Carbonats | 3 |
| I4 | 2,95 - 3,00 | CH-Gruppen des freien, nicht abreagierten Propylenoxids | 1 |
| I6 | 6,22 - 6,29 | CH Gruppe der in das Polymer über den Einbau von Maleinsäureanhydrid erhaltenen Doppelbindung | 2 |
| I7 | 7,03 - 7,04 | CH Gruppe für freies, nicht abreagiertes Maleinsäureanhydrid | 2 |

Angegeben ist das molare Verhältnis der Menge an cyclischem Propylencarbonat zu Carbonat-Einheiten im Polyethercarbonatpolyol (Selektivität g/e) und das molare Verhältnis von Carbonatzu Ethergruppen im Polyethercarbonatpolyol (e/f) sowie die Anteile des nicht umgesetzten Propylenoxids (in mol%) und Maleinsäureanhydrids (in mol%).

Unter Berücksichtigung der relativen Intensitäten wurden die Werte wie folgt berechnet:

Molares Verhältnis der Menge an cyclischem Propylencarbonat zu Carbonat-Einheiten im Polyethercarbonatpolyol (Selektivität g/e):

$$g/e = I3 / I2$$

Molares Verhältnis von Carbonatgruppen zu Ethergruppen im Polyethercarbonatpolyol (e/f):

$$e/f = I2 / I1$$

Der Anteil an Carbonateinheiten ($C'_{Carbonat}$ in mol%) in den Wiederholungseinheiten des Polyetherestercarbonatpolyols erhalten aus der Terpolymerisation von Propylenoxid, Maleinsäureanhydrid und $CO_2$:

$$C'_{Carbonat}\ (mol\%) = [(I2/3) / ((I1/3) + (I2/3) + (I6/2))] \times 100\%$$

Der Anteil an Carbonateinheiten ($C'_{Carbonat}$ in Gew.-%.) in den Wiederholungseinheiten des Polyethercarbonatpolyols erhalten aus der Terpolymerisation von Propylenoxid, Allylglycidylether und $CO_2$:

$$C'_{Carbonat}\ (Gew.\text{-}\%.) = [(I2/3)*44 / ((I1/3)*58 + (I2/3)*102 + (I5)*98)] \times 100\%$$

Der Anteil der über den Einbau des Maleinsäureanhydrids ($B_{Doppelbindung}$ in mol%) resultierenden Doppelbindungen in den Wiederholungseinheiten des Polyetherestercarbonatpolyols:

$$B_{Doppelbindung}\ (mol\%) = [(I6/2) / ((I1/3) + (I2/3) + (I6/2))] \times 100\%$$

Der Anteil an Kohlenstoff-Kohlenstoff Doppelbindungen ($B_{Doppelbindung}$ in Gew.-%.) in den Wiederholungseinheiten des Polyethercarbonatpolyols erhalten aus der Terpolymerisation von Propylenoxid, Allylglycidylether und $CO_2$:

$$B_{Doppelbindung}\ (Gew.\text{-}\%.) = [(I2/3)*44 / ((I1/3)*58 + (I2/3)*102 + (I5)*98)] \times 100\%$$

Der molare Anteil des nicht umgesetzten Propylenoxids ($R_{PO}$ in mol%) bezogen auf die Summe der bei der Aktivierung und der Copolymerisation eingesetzten Menge an Propylenoxid, berechnet sich nach der Formel:

$$R'_{PO} = [(I4) / ((I1/3) + (I2/3) + (I3/3) + (I4) + (I6/2) + (I7/2))] \times 100\%$$

Der molare Anteil des nicht umgesetzten Maleinsäureanhydrids ($R_{MSA}$ in mol%) bezogen auf die Summe der bei der Aktivierung und der Copolymerisation eingesetzten Menge an Maleinsäureanhydrid, berechnet sich nach der Formel:

$$R_{MSA} = [(I7/2) / ((I1/3) + (I2/3) + (I3/3) + (I4) + (I6/2) + (I7/2))] \times 100\%$$

Das Zahlenmittel $M_n$ und das Gewichtsmittel $M_w$ des Molekulargewichts der eingesetzten Polyethercarbonatpolyole wurde mittels Gelpermeationschromatographie (GPC) bestimmt. Es wurde nach DIN 55672-1: "Gelpermeationschromatographie, Teil 1 - Tetrahydrofuran als Elutionsmittel" vorgegangen (SECurity GPC-System von PSS Polymer Service, Flussrate 1.0 ml/min; Säulen: 2xPSS SDV linear M, 8x300 mm, 5 $\mu$m; RID-Detektor). Dabei wurden Polystyrolproben bekannter Molmasse zur Kalibrierung verwendet. Die Polydispersität wurde als das Verhältnis $M_w/M_n$ berechnet.

Die OH-Zahl (Hydroxylzahl) wurde in Anlehnung an DIN 53240-2 bestimmt, wobei jedoch Pyridin anstelle von THF/Dichlormethan als Lösemittel verwendet wurde. Es wurde mit 0,5 molarer ethanolischer KOH Lösung titriert (Endpunktserkennung mittels Potentiometrie). Als Prüfsubstanz diente Rizinusöl mit durch Zertifikat festgelegter OH-Zahl. Die Angabe der Einheit in "mg/g" bezieht sich auf mg[KOH]/g[Eq-Polyethercarbonatpolyol].

Die Prüfung im Zugversuch nach DIN 53504 - S2 Norm mit einem S2-Prüfkörper erfolgte bei Raumtemperatur mit einer Prüfgeschwindgkeit von 200 mm/min. Zudem wurde eine Prüfung im Zugversuch nach DIN 53504 - S2 Norm mit einem S2-Prüfkörper bei 80 °C mit einer Prüfgeschwindigkeit von 200 mm/min durchgeführt. Für die Bestimmung der Stadardabweichung wurden pro Messpunkt 5 Probekörper aus jeweils einer konditionierten Platte entnommen und geprüft.

Die Shore-A-Härte der Elastomere wurde in Anlehnung an DIN 53505 durchgeführt. Dazu wurden zylinderförmige Probekörper (32 mm Durchmesser, 40 mm Höhe) bei 80 °C 30 min hergestellt. Anschließend wurden die Probekörper eine Stunde bei 130 °C konditioniert und anschließend geprüft. Für die Bestimmung bei erhöhter Temperatur wurden die Probekörper in einem Umluftofen für 2 h bei 80 °C konditioniert und anschließend direkt geprüft. Für die Bestimmung der Stadardabweichung wurden pro Messpunkt 5 Probekörper aus jeweils einer konditionierten Platte entnommen und geprüft.

Um die Temperaturwechselbeständigkeit des Elastomers zu bestimmen wurden ebene Platten im bereits beschriebenen Verfahren hergestellt und bei 80 °C ausgehärtet. Die Platten wurden anschließend nicht konditioniert und die Probekörper (DIN 53504 - S2) direkt entnommen. Anschließend wurden die Probekörper in einer Klimaklammer

einem definierten Temperaturprofil ausgesetzt. Dabei wurden sie ausgehend von Raumtemperatur innerhalb von 20 Minuten auf 160 °C erhitzt und dort 15 Minuten gehalten. Im Folgenden wurden die Proben in 50 Minuten auf -40 °C abgekühlt und dort wiederum 15 Minuten gehalten, bis sie wieder innerhalb von 20 Minuten auf Raumtemperatur erhitzt wurden. Dieser Temperaturzyklus wurde insgesamt dreimal durchlaufen und nach Beenden des dritten Zyklus wurden insgesamt zwei Probekörper entnommen und nach DIN 53504 im Zugversuch geprüft. Für die Bestimmung der Stadardabweichung wurden 5 Probekörper geprüft.

*Herstellung der Kohlenstoff-Kohlenstoff Doppelbindungen enthaltendes Polyethercarbonatpolyole (A-1)*

A-1-1: Herstellung des Kohlenstoff-Kohlenstoff Doppelbindungen enthaltenden Polyethercarbonatpolyols

Schritt ($\alpha$): 1. Aktivierungsstufe

In einen mit Stickstoff gespülten 60L Druckreaktor mit Gasdosierungseinrichtung (Gaseinleitungsrohr) wurden eine Suspension aus 11,3 g DMC- sowie 3000 g cyclisches Propylencarbonat (cPC) vorgelegt. Der Reaktor wurde auf ca. 100 °C aufgeheizt und 1 h bei einem Druck $p_{abs}$ = 100 mbar mit $N_2$ inertisiert.

Schritt ($\alpha$): 2. Aktivierungsstufe

Anschließend wurde der Reaktor mit $CO_2$ auf einen Druck von 25 bar eingestellt. In den Reaktor wurden bei 110 °C, unter Rühren (316 U/min) 600 g Propylenoxid (PO) innerhalb von 2 min eindosiert. Das Anspringen der Reaktion machte sich durch eine Temperaturspitze ("Hotspot") und eine Druckabnahme bemerkbar.

Schritt ($\gamma$): Polymerisationsstufe mit kontinuierlicher Dosierung des Starteralkohols

Nach der erfolgten Aktivierung wurden 23,15 kg Propylenoxid mit 6,0 kg/h, 1,45 kg Glycerin (additiviert mit 160 ppm $H_3PO_4$) und 16,62 kg einer 30 wt% MSA-cPC Mischung mit 4,82 kg/h gleichzeitig in den Reaktor eindosiert. Dabei wurde die Reaktionstemperatur auf 105 °C gesenkt. Weiterhin wurde $CO_2$ so dosiert, dass der Druck von 25 bar konstant gehalten wurde. Nach Dosierende wurde noch ca. 30 min nachgerührt. Die Abtrennung des cyclischen Propylencarbonats vom Polyethercarbonatpolyol erfolgte in einem Dünnschichtverdampfer (T = 140 °C, $p_{abs}$ < 3 mbar, 400 U/min). Dieser Versuch wurde wiederholt und die Mischcharge wurde mittels GPC, NMR und OHZ analysiert.

In der Tabelle 2 sind analytische Daten zum resultierenden doppelbindungshaltigen Polyethercarbonatpolyol (Gehalt an eingebautem $CO_2$, Gehalt an eingebautem Doppelbindung; Molekulargewicht (Mn), die Polydispersität und die Hydroxylzahl (OHZ).

A-1-2: Herstellung des Kohlenstoff-Kohlenstoff Doppelbindungen enthaltenden Polyethercarbonatpolyols sow

Die Herstellung erfolgte analog des Beispieles 1 (PEC-1) mit dem Unterschied dass der Reaktionsdruck 75 bar betrug. Weiterhin wurden 20,26 kg Propylenoxid mit 5,4 kg/h; 1,45 kg Glycerin (additiviert mit 160 ppm $H_3PO_4$) und 16,62 kg einer 30 wt% MSA/cPC Mischung mit 4,82 kg/h dosiert wurden.

Tabelle 2 Gehalt an eingebautem $CO_2$, Gehalt an eingebautem Doppelbindung (DB); Molekulargewicht (Mn), die Polydispersität und die Hydroxylzahl (OHZ). Der doppelbindungshaltigen Polyethercarbonatpolyole A-1-1 und A-1-2 sowie der Polyolmischung A-1-4 durch Mischen der Kohlenstoff-Kohlenstoff Doppelbindungen enthaltenden Polyethercarbonatpolyole A-1-1 und A-1-2.

| Polyethercarbonatpolyol / Polyolmischung | CO2 [Gew.-%] | DB [Gew.-%] | Mn [g/mol] | PDI | OHZ [mg/g] |
|---|---|---|---|---|---|
| A-1-1 | 7,3 | 4,4 | 2127 | 1,28 | 93,0 |
| A-1-2 | 12,1 | 4,5 | 2170 | 1,23 | 82,4 |
| A-1-3[a)] | 9,7 | 4,5 | 2149 | 1,26 | 87,7 |
| a) Herstellung von Polyolmischung A-1-3 erfolgte durch physikalisches Mischen von 50 Gew.-% A-1-1 und 50 Gew.-% A-1-2. b)Die für A-1-3 gezeigten Werte wurden jeweils aus dem arithmetischen Mittel für Polyethercarbonatpolyolen A-1-1 und A-1-2 gemäß des Massenanteils berechnet. | | | | | |

A-1-4 bis A-1-17: Herstellung von Kohlenstoff-Kohlenstoff Doppelbindungen enthaltenden Polyethercarbonatpolyolen

Schritt (α): 1. Aktivierungsstufe

Der DMC-Katalysator, der nicht aktiviert ist, wurde in 4-Methyl-2-oxo-1,3-dioxolan (cPC) in einem 1 L-Druckreaktor mit Gasdosierungseinrichtung suspendiert. Die Suspension wurde dann auf 130 °C erhitzt, bei 1200 U/min gerührt und über 30 min wurde mit 26-30 L/h Stickstoff eingeleitet und gleichzeitig ein reduzierter Druck von 75-100 mbar angelegt.

Schritt (α): 2. Aktivierungsstufe

In dem Druckreaktor wurde bei 130 °C, 1200 U/min und bei einem Vordruck von rund 100 mbar, der mit Stickstoff eingestellt wurde, eine Menge von 10 g der Mischung aus Propylenoxid (PO) und Maleinsäureanhydrid (MSA) auf einmal zugegeben. Nach 10 min wird die Zugabe von 10 g PO und MSA wiederholt. Das Anspringen der Reaktion machte sich durch eine Temperaturspitze ("Hotspot") und durch einen Druckabfall auf den Ausgangsdruck bemerkbar. Nach dem ersten Druckabfall wurde der Reaktor mit 25 bar $CO_2$ beaufschlagt und anschließend wurde zur Aktivierung weitere 10 g der PO/MSA-Mischung auf einmal zugegeben. Nach einer Wartezeit kam es erneut zu einer Temperaturspitze und der Gesamtdruck im Reaktor zeigte eine Druckabnahme.

Schritt (γ): Polymerisationsstufe mit kontinuierlicher Dosierung des Starteralkohols

Nach der erfolgten Aktivierung wurden wurde die PO/MSA-Mischung sowie der Starteralkohol Glycerin kontinuierlich (und simultan) in den Reaktor eindosiert. Gleichzeitig wurde die Reaktionstemperatur von 130 °C mit ca. 1 °C/min auf 110 °C gesenkt. Der Fortschritt der Reaktion wurde an dem $CO_2$-Verbrauch beobachtet, wobei durch kontinuierlich geregelte Nachdosierung von $CO_2$ der Druck im Reaktor bei 25 bar konstant gehalten wurde. Nach beendeter Zugabe von MSA/PO wurde bei 105-110 °C und Reaktionsdruck bis zum Versiegen des $CO_2$-Verbrauchs und Ende des Versuchstages nachgerührt (1200 U/min).

Aufarbeitung und Analytik:

Das erhaltene Produktgemisch wurde mittels Rotationsverdampfer von Spuren PO befreit und mittels NMR und GPC wie beschrieben analysiert. Anschließend wurde cPC mittels Dünnschichtverdampfung (0,1 mbar, 140 °C) aus dem Produkt entfernt.

Die Einwaagen, Dosierraten sowie die Analytik der resultierenden Polyole der Ausführungsbeispiele A-1-4 bis A-1-17 können Tabelle 3 entnommen werden.

Tabelle 3: Eingesetzte Stoffmengen, Dosierraten sowie die Analytik der Kohlenstoff-Kohlenstoff Doppelbindungen enthaltenden Polyethercarbonatpolyole A-1-4 bis A-1-17:

| A - 1- | eingesetzte Stoffmengen | | | | Dosierraten | | Analytik resultierendes Polyols | | | |
|---|---|---|---|---|---|---|---|---|---|---|
| | DMC [mg] | cPC [g] | Σm (PO/ MSA) [g][a)] | Glycerin[b)] [g] | PO/MSA -Gemisch [g/min] | Glycerin [g/min] | $CO_2$[c)] [Gew.-%] | DB[d)] [Gew.-%] | Mn (GPC) [g/mol] | PDI (GPC) [g/mol] |
| 4 | 329,7 | 49,8 | 660 | 35,35 | 2,65 | 0,167 | 6,6 | 4,0 | 2044 | 1,39 |
| 5 | 330,1 | 49,8 | 666 | 35,35 | 2,67 | 0,172 | 4,2 | 4,3 | 2051 | 1,84 |
| 6 | 329,6 | 49,7 | 640 | 35,35 | 2,63 | 0,177 | 4,9 | 4,3 | 2096 | 1,46 |
| 7 | 400,1 | 50,2 | 640 | 35,35 | 2,68 | 0,172 | 5,2 | 4,4 | 2018 | 1,21 |
| 8 | 399,0 | 49,7 | 640 | 35,35 | 2,67 | 0,168 | 4,5 | 4,4 | 2075 | 1,28 |
| 9 | 400,0 | 50,0 | 640 | 35,35 | 2,68 | 0,178 | 3,6 | 4,4 | 2031 | 1,26 |
| 10 | 400,0 | 50,0 | 640 | 35,35 | 2,49 | 0,17 | 4,2 | 4,3 | 2085 | 1,59 |
| 11 | 399,0 | 49,9 | 640 | 35,35 | 2,67 | 0,168 | 4,5 | 4,4 | 2058 | 1,27 |
| 12 | 399,5 | 49,9 | 640 | 35,35 | 2,67 | 0,178 | 5,8 | 4,3 | 2014 | 1,25 |

(fortgesetzt)

| A - 1- | eingesetzte Stoffmengen | | | | Dosierraten | | Analytik resultierendes Polyols | | | |
|---|---|---|---|---|---|---|---|---|---|---|
| | DMC [mg] | cPC [g] | ∑m (PO/ MSA) [g][a)] | Glycerin[b)] [g] | PO/MSA -Gemisch [g/min] | Glycerin [g/min] | $CO_2$[c)] [Gew.-%] | DB[d)] [Gew.-%] | Mn (GPC) [g/mol] | PDI (GPC) [g/mol] |
| 13 | 399,7 | 49,9 | 640 | 35,35 | 2,68 | 0,172 | 4,7 | 4,3 | 2139 | 1,49 |
| 14 | 399,3 | 49,7 | 640 | 35,35 | 2,67 | 0,177 | 4,1 | 4,4 | 2148 | 1,41 |
| 15 | 400,0 | 50,0 | 640 | 35,35 | 2,67 | 0,172 | 5,1 | 4,4 | 2087 | 1,23 |
| 16 | 399,8 | 49.6 | 640 | 35,35 | 2,68 | 0,18 | 4,2 | 4,3 | 2056 | 1,69 |
| 17 | 400,0 | 50,1 | 640 | 35,35 | 2,65 | 0,187 | 5,9 | 4,1 | 2445 | 1,39 |

a) Gesamtmasse des PO/MSA-Gemischs mit 17,1 wt.-% MSA bezogen auf die Masse von MSA+PO b) Das eingesetzte Glycerin wurde mit $H_3PO_4$ additiviert (200 g Glycerin wurden mit 18 mg 85%iger wässriger Phosphorsäure versetzt). c) $CO_2$ in Form von Carbonateinheiten im Produktpolyol laut $^1$H-NMR in wt.-%. d) Doppelbindungsgehalt (DB) im Produktpolyol laut $^1$H-NMR in wt.-%

A-1-18: Herstellung der Polyolmischung A-1-18 durch Mischen der Kohlenstoff-Kohlenstoff Doppelbindungen enthaltenden Polyethercarbonatpolyole A-1-4 bis A-1-17

In Tabelle 4 ist die Herstellung der Polyolmischung A-1-18 zusammengefasst.

Tabelle 4: Herstellung von Polyolmischung A-1-18 erfolgte durch physikalisches Mischen von den Massen m bzw. Gewichstanteilen w A-1-4 bis A-1-17.

| A-1- | 4 | 5 | 6 | 7 | 8 | 9 | 10 | 11 | 12 | 13 | 14 | 15 | 16 | 17 |
|---|---|---|---|---|---|---|---|---|---|---|---|---|---|---|
| m [g] | 566 ,2 | 598, 5 | 592 ,8 | 598 ,9 | 588 ,0 | 585 ,1 | 575 ,6 | 576 ,4 | 577 ,4 | 598 ,7 | 554 ,6 | 360 ,8 | 588 ,4 | 121 0,4 |
| w [Gew.-%] | 6,6 1 | 6,98 | 6,9 2 | 6,9 9 | 6,8 6 | 6,8 3 | 6,7 2 | 6,7 2 | 6,7 4 | 6,9 8 | 6,4 7 | 4,2 1 | 6,8 6 | 14, 12 |

Tabelle 5: Mittlerer C-C Doppelbindungsgehalt, mittlerer CO2-Geahlt von 4,8 Gew.-% (berechent über die Massenbilanz) wurde sowie die experimentell bestimmte Hydroxylzahl (OHZ) der Polyolmischung A-1-18.

| Polyolmischung A-1 | CO2 [Gew.-%] | DB [Gew.-%] | OHZ [mg/g] |
|---|---|---|---|
| A-1-18 | 4,8 | 4,3 | 93,8 |

*Herstellung der Polyurethan-haltigen Elastomere*

300,00 g der Kohlenstoff-Kohlenstoff Doppelbindungen enthaltenden Polyethercarbonatpolyolmischung A-1-3 (Beispiel 1 bis 4) bzw. A-1-18 (Beispiel 5 bis 8) wurden bei 60 °C für 60 min bei einem Absolutdruck von ca. 50 mbar entgast. Anschließend wurden die in Tabelle 6 angegebenen Mengen des vorgeheizten MDI-Trimer als Komponente (B-1), gegebenfalls 3 g 1,1'-Di-(tert-butylperoxy)-3,3,5-trimethylcyclohexane,75% sol.in arom.free min.spirit) als Peroxid (C-1) mit 0,15 g Borchi KAT 22 (Hexansäure, 2-Ethyl-, Zinksalz, basisch) (OMG Borchers GmbH, Langenfeld) als Katalysator (D) in einem 700 ml Polypropylenbecher (PP-Becher) mit einem Holzstab vermischt.

Anschließend wurde die homogene Mischung mittels Drucktopf in ein flüssigtemperiertes Stahlwerkzeug injiziert. Das Stahlwerkzeug war isotherm auf 80 °C erwärmt. Nach vollständiger Füllung der Kavität (300 mm * 150 mm * 2 mm) wurde die Mischung 30 min unter konstantem punktuellen Nachdruck von 6 bar vernetzt.

Abschließend wurde die Platte entformt. Die ausgehärtete Platte wurde nun bei 130 °C 75 min in einem Umluftofen getempert.

Tabelle 6: Eingesetzte Mengen der Kohlenstoff-Kohlenstoff Doppelbindungen enthaltenden Polyethercarbonatpolyolmischungen (A-1-3) bzw. (A-1-18) mit der Isocyanatkomponente (B-1), des Peroxids (C-1) und des verwendeten Katalysators (D) zur Herstellung der Polyurethan-haltigen Elastomere in den Beispielen 1 bis 8.

| Beispiel[a)] | m(A-1-3)[b)] [g] | m(A-1-18)[c)] [g] | m(B-1) [g] | m(C-1) [g] | m(D) [g] | n(Iso)/n(OH)[d)] [mol/mol] |
|---|---|---|---|---|---|---|
| 1 (Vgl.) | 300,00 | - | 62,42 | - | 0,15 | 1,0 |
| 2 (Vgl.) | 300,00 | - | 62,42 | 3,00 | 0,15 | 1,0 |
| 3 (Vgl.) | 300,00 | - | 93,63 | - | 0,15 | 1,5 |
| 4 | 300,00 | - | 93,63 | 3,00 | 0,15 | 1,5 |
| 5 (Vgl.) | - | 300,00 | 66,46 | - | 0,15 | 1,0 |
| 6 (Vgl.) | - | 300,00 | 66,46 | 3,00 | 0,15 | 1,0 |
| 7 (Vgl.) | - | 300,00 | 99,68 | - | 0,15 | 1,5 |
| 8 | - | 300,00 | 99,68 | 3,00 | 0,15 | 1,5 |
| a) (Vgl. Vergleichsbeispiel) b) Herstellung von Polyolmischung A-1-3 erfolgte durch physikalisches Mischen von 50 Gew.-% A-1-1 und 50 Gew.-% A-1-2 c) Herstellung von Polyolmischung A-1-18 erfolgte gemäß Tabelle 4 d) molares Verhältnis der NCO-Gruppen der Isocyanatkomponente (B-1) zu den OH-Gruppen desrKohlenstoff-Kohlenstoff Doppelbindungen enthaltenden Polyethercarbonatpolyolmischung (A-1-4) bzw (A-1-18) | | | | | | |

*Zugversuche für Elastomere gemäß Beispiel 1 bis 4 bei Raumtemperatur und 80 °C sowie Shore A Härten*

Tabelle 7: Ergebnisse der Zugversuche bei Raumtemperatur und Shore A Härten

| Beispiel | 1 (Vgl.) | 2 (Vgl.) | 3 (Vgl.) | 4 |
|---|---|---|---|---|
| Bruchspannung [MPa] | 5,24 ± 0,47 | 5,46 ± 0,41 | 11,89 ± 0,81 | 16,97 ± 2,07 |
| Bruchdehnung [%] | 153,18 ± 8,54 | 127,42 ± 5,41 | 151,58 ± 4,65 | 131,79 ± 8,92 |
| Shore A | 62,68 ± 2,51 | 69,90 ± 1,01 | 81,57 ± 0,59 | 84,69 ± 0,37 |

Tabelle 8: Ergebnisse der Zugversuche bei 80 °C und Shore A Härten

| Beispiel | 1 (Vgl.) | 2 (Vgl.) | 3 (Vgl.) | 4 |
|---|---|---|---|---|
| Bruchspannung [MPa] | 1,87 ± 0,39 | 3,32 ± 0,28 | 1,86 ± 0,31 | 3,44 ± 0,47 |
| Bruchdehnung [%] | 47,11 ± 10,96 | 55,95 ± 5,37 | 44,78 ± 7,38 | 49,66 ± 8,48 |
| Shore A | 63,90 ± 1,32 | 69,64 ± 0,78 | 72,91 ± 0,57 | 74,79 ± 0,93 |

Die Daten der Zugversuche bei Raumtemperatur in Tabelle 7 zeigen den Synergieeffekt eines Isocyanatüberschusses in Kombination mit der Verwendung von Peroxiden (im erfindungsgemäßen Beispiel 4, also der Vernetzung der reaktiven Doppelbindung, gut auf. So nimmt die Bruchspannung durch die Vernetzung der Doppelbindung zunächst nicht zu. Die Ergebnisse der Bruchdehnung sowie der Härtemessung belegen, dass eine Vernetzung stattgefunden hat. Dies wird auch deutlich, wenn das Verhalten bei erhöhter Temperatur (80 °C) in Tabelle 8 betrachtet wird, da hier der Einfluss des Isocyanatüberschusses durch das Auflösen von Isocyanat-Nebenbindungen vernachlässigt werden kann und nur die mit Peroxid vernetzten Proben eine hohe Bruchspannung aufweisen. Wird mit einem Isocyanatüberschuss (Beispiel 3 und 4) bei Raumtemperatur geprüft, weisen die Probekörper eine deutlich höhere Bruchspannung auf, als die stöchiometrischen Proben (Beispiel 1 und 2). Die höhere Bruchspannung von 5,24 MPa in Vergleichsbeispiel 1 auf 11,89 MPa in Vergleichsbeispiel 3) wird allerdings bei gleichbleibender Dehnung erreicht. Das Vernetzen der Doppelbindung, das ohne Isocyantüberschuss in Vergleichsbeispiel 2 keinen Einfluss auf die Bruchspannung hat, trägt nun bei einem Isocyanatüberschuss im erfindungsgemäßen Beispiel 4 zu einer weiteren deutlichen Erhöhung der Bruchspannung bei.

*Temperaturwechselbeständigkeitsuntersuchungen für Elastomere gemäß Beispiel 5 bis 8*

Tabelle 9: Ergebnisse der Zugversuche vor der Untersuchung zur Temperaturwechseltes tbeständigkeit

| Elastomer | 5 (Vgl.) | 6 (Vgl.) | 7 (Vgl.) | 8 |
|---|---|---|---|---|
| Bruchspannung [MPa] | 2,00 ± 0,01 | 1,08 ± 0,02 | 5,39 ± 0,32 | 5,31 ± 0,48 |
| Bruchdehnung [%] | 69,44 ± 1,32 | 62,34 ± 0,34 | 88,43 ± 3,90 | 90,32 ± 0,98 |

Der in Tabelle 9 gezeigte Zyklus des Temperaturwechselbeständigkeit zeigt, dass durch das Erreichen der maximalen Temperatur von 160 °C und die Haltedauer ein Effekt ähnlich dem Tempern erzielt wird. Für die Aktivierung der Doppelbindungsvernetzung über die Peroxide wird somit genügend Aktivierungsenergie zur Verfügung gestellt.

Die Versuche zeigen abermals den Effekt des Isoyanatüberschusses auf. Sowohl die stöchiometrische (Beispiel 5) wie auch die stöchiometrische Mischung mit Peroxid (Beispiel 6) weisen bei RT vergleichbar niedrige Werte für die Bruchspannung und verringerte Werte für die Bruchdehnung auf. Durch Zugabe von Isocyanatüberschuss mit (Beispiel 7) und ohne Peroxid (Besipiel 8)wird die Bruchspannung sowie -dehnung erhöht. Ein Effekt des Peroxids ist ohne den Tempervorgang, bzw. das Auslösen einer zweiten Vernetzungsstufe über die Doppelbindungen des Polyols, ist nicht zu beobachten.

Tabelle 10: Ergebnisse der Zugversuche nach 3 Zyklen der Temperaturwechseltestbeständigkeit:

| Elastomer | 5 (Vgl.) | 6 (Vgl.) | 7 (Vgl.) | 8 |
|---|---|---|---|---|
| Bruchspannung [MPa] | 0,91 ± 0,01 | 4,27 ± 0,40 | 5,44 ± 0,12 | 17,07 ± 0,14 |
| Bruchdehnung [%] | 86,20 ± 4,79 | 75,18 ± 4,83 | 103,27 ± 1,50 | 95,57 ± 0,23 |

Nach Durchlaufen von drei Temperaturwechseltest-Zyklen weisen die Proben mit Peroxid (Beispiel 6 und 8) entsprechend Tabelle 10 eine signifikante Verbesserung der Zugeigenschaften auf, wohingegen die Proben ohne Peroxid (Beispiel 5 und 7) vergleichbar mit dem Ausgangszustand sind. Bei den stöchiometrischen Proben mit Peroxid in Vergleichsbeispiel 6 ist die Bruchspannung von 1,08 MPa auf 4,27 MPa erhöht (-Faktor 4) bei gleichzeitig geringfügigem Anstieg der Bruchdehnung. In dem erfindungsgemäßen Beispiel 8 für Elastomere hergestellt mit Isocyanatüberschuss und Peroxid ist die Bruchspannung von 5,31 MPa auf 17,07 MPa (-Faktor 3,2) erhöht, bei Anstieg der Bruchdehnung. Der Vergleich der stöchiometrischen Proben mit Peroxid, der isocynatüberschuss-Proben ohne Peroxid in Vergleichsbeispiel 7 und der Proben mit Isocyanatüberschuss und Peroxid zeigt den synergetischen Effekt der Peroxidzugabe in verbindung mit Isocyanatüberschuss für Elastomere im erfindungsgemäßen Beispiel 8 eindeutig auf.

## Patentansprüche

1. Verfahren zur Herstellung eines Polyurethan-haltigen Elastomers durch Umsetzung einer Polyolkomponente (A), enthaltend mindestens ein Kohlenstoff-Kohlenstoff Doppelbindungen enthaltendes Polyethercarbonatpolyol (A-1) , mit einer Isocyanatkomponente (B-1) enthaltend NCO-Gruppen, in Gegenwart eines Radikalstarters (C), bevorzugt mindestens einem Peroxid (C-1), und optional eines Katalysators (D), wobei das molare Verhältnis der NCO-Gruppen der Isocyanatkomponente (B-1), zu den OH-Gruppen der Kohlenstoff-Kohlenstoff Doppelbindungen enthaltenden Polyolkomponente (A) größer als 1,0 ist; und wobei die Isocyanatkomponente (B-1) eine durchschnittliche NCO-Funktionalität von 1,5 bis 10 hat.

2. Verfahren gemäß Anspruch 1, wobei der Radikalstarter (C) mindestens ein Peroxid (C-1) ist, und das ausgewählt wird aus der Gruppe bestehend aus Dibenzoylperoxid, Dilauroylperoxid, Acetylacetonperoxid, Cyclohexanonperoxid, Methylethylketonperoxid, Methylisobutylketonperoxid, Cumolhydroperoxid, tert.-Butylhydroperoxid, Di-(2-tert.-butyl-peroxyisopropyl)-benzen, tert.-Butylcumylperoxid, Di-tert.amylperoxid, Di-tert.-butylperoxid, Dicumylperoxid, 2,5-Dimethyl-2,5-di-(tert.-butylperoxy)-hexan, 1,1-Di-(tert.-butylperoxy)-3,3,5-trimethylcyclohexan, 1,1-Di-(tert.-butylperoxy)-cyclohexan, 2,5-Dimethyl-2,5-di(2-ethylhexanoylperoxy)-hexan, tert.-Butyl-peroxy-benzoat, tert.-Butylperoxy-3,5,5-trimethylhexanoat, tert.-Butylperoxy-2-ethylhexanoat, tert.-Butylmonoperoxymaleat, Di-(4-tert.-butyl-cyclohexyl)-peroxydicarbonat, tert.-Butylperoxy-2-ethylhexylcarbonat, tert.-Butylperoxyisopropylcarbonat, 1,3 1,4-Bis(tert-butylperoxyisopropyl)benzene, t-Butyl Cumyl Peroxide, 2,5-Di(t-butylperoxy)-2,5-dimethylhexane, n-Butyl-4,4'-di(t-butylperoxy)valerate, 1,1'-Di-(tert-butylperoxy)-3,3,5-trimethylcyclohexan, Di-(2,4-dichlorobenzoyl)-peroxid, tert.-Butylperoxybenzoat, Butyl-4,4-di-(tert.-butylperoxy) valerat, 2,5-Dimethyl-2,5-di(tert.-butylperoxy)hexyn-3, 2,2'-Azodiisobutyronitril und Di-tert-Butylperoxid.

3. Verfahren gemäß einem der vorherigen Ansprüche, wobei das Kohlenstoff-Kohlenstoff Doppelbindungen enthaltende Polyethercarbonatpolyol (A-1) einen Gehalt an Kohlenstoff-Kohlenstoff Doppelbindungen von 0,5 Gew.-% bis 17,0 Gew.-%, bevorzugt von 1,0 Gew.-% bis 6,0 Gew.-% aufweist.

4. Verfahren gemäß einem der vorherigen Ansprüche, wobei das Kohlenstoff-Kohlenstoff Doppelbindungen enthaltende Polyethercarbonatpolyol (A-1) einen $CO_2$ Anteil von 0,5 Gew.-% bis 50 Gew.-%, bevorzugt von 5 Gew.-% bis 25 Gew.-%, aufweist.

5. Verfahren gemäß einem der vorherigen Ansprüche, wobei das Kohlenstoff-Kohlenstoff Doppelbindungen enthaltende Polyethercarbonatpolyol (A-1) erhältlich ist durch Anlagerung eines Alkylenoxids, mindestens eines Kohlenstoff-Kohlenstoff Doppelbindungshaltigen Monomers und $CO_2$ an eine H-funktionelle Starterverbindung in Gegenwart eines Doppelmetallcyanidkatalysators.

6. Verfahren gemäß Anspruch 5, wobei das mindestens eine Kohlenstoff-Kohlenstoff Doppelbindungshaltige Monomer ausgewählt wird aus mindestenes einem der Monomere aus einer oder mehrerer der Gruppen bestehend aus

(a) Allylglycidylether, Vinylcyclohexenoxid, Cyclooctadienmonoepoxid, Cyclododecatrienmonoepoxid, Butadienmonoepoxid, Isoprenmonoepoxid, Limonenoxid, 1,4-Divinylbenzolmonoepoxid, 1,3-Divinylbenzolmonoepoxid, Glycidylester ungesättigter Fettsäuren, teilweise epoxidierte Fette und Öle und/oder deren Mischungen
(b) Alkylenoxid mit Doppelbindung der allgemeinen Formel (IX) ist:

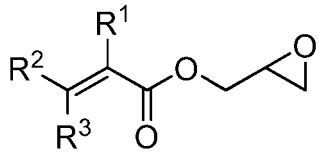
(IX)

wobei $R_1$ bis $R_3$ unabhängig voneinander H, Halogen, substituierte oder nicht-substituierte C1-C22-Alkyl, substituierte oder nicht-substituierte C6-C12 Aryl sind
(c) cyclisches Anhydrid der Formel (X), (XI) oder (XII) entspricht:

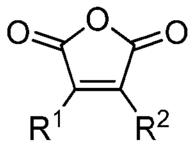 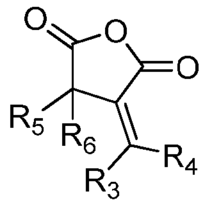 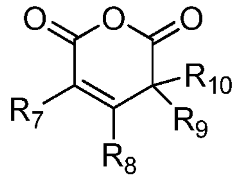 ,

(X) (XI) (XII)

wobei $R_1$ bis $R_{10}$ unabhängig voneinander H, Halogen, substituierte oder nicht-substituierte C1-C22-Alkyl, substituierte oder nicht-substituierte C6-C12 Aryl sind,
und
(d) 4-Cyclohexen-1,2-disäureanhydrid, 4-Methyl-4-cyclohexen-1,2-disäureanhydrid, 5,6-Norbornen-2,3-disäureanhydrid, Allyl-5,6-norbornen-2,3-disäureanhydrid, Dodecenylbernsteinsäureanhydrid, Tetradecenylbernsteinsäureanhydrid, Hexadecenyl-bernsteinsäureanhydrid und Octadecenylbernsteinsäureanhydrid.

**7.** Verfahren gemäß Anspruch 6, wobei das mindestens eine, mindestens das eine Kohlenstoff-Kohlenstoff Doppelbindungen enthaltende Monomer ausgewählt wird aus einer oder mehrerer der Gruppen bestehend aus

(a) Allylglycidylether, Vinylcyclohexenoxid und Limonenoxid
(b) Glycidylacrylat und Glycidylmethacrylat,
(c) Maleinsäureanhydrid und Itaconsäureanhydrid
und
(d) 4-Cyclohexen-1,2-disäureanhydrid und 5,6-Norbornen-2,3-disäureanhydrid

**8.** Verfahren gemäß einem der vorherigen Ansprüche, wobei die Isocyanatgruppen-haltige Komponente (B-1) aliphatische, cycloaliphatische und/oder aromatische Isocyanate, bevorzugt HDI, MDI, TDI, NDI, deren Trimerisierungs- oder höheren Oligomerisierungsprodukte und/oder deren Addukte enthält.

**9.** Verfahren gemäß einem der vorherigen Ansprüche, umfassend die folgenden Schritte:

i) Umsetzung einer Polyolkomponente (A), enthaltend mindestens ein Kohlenstoff-Kohlenstoff Doppelbindungen enthaltendes Polyethercarbonatpolyol (A-1) mit einer Isocyanatkomponente (B-1) enthaltend NCO-Gruppen, zu einem einem Polyurethan, optional in Gegenwart eines Katalysators (D),
ii) Vernetzung des in i) erhaltenden Polyurethans in Gegenwart von mindestens einem Radikalstarter (C), bevorzugt mindestens einem Peroxid (C-1).

**10.** Verfahren gemäß Anspruch 9, wobei in Schritt i) mindestens ein Katalysator (D) für die Reaktion der Polyolkomponente (A) mit einer Isocyanatgruppen-haltigen Komponente (B-1) enthaltend terminale NCO-Gruppen zugegeben wird.

**11.** Verfahren gemäß einem der Ansprüche 1 bis 8, umfassend die folgenden Schritte:

(iii) Umsetzung einer Polyolkomponente (A), enthaltend mindestens ein Kohlenstoff-Kohlenstoff Doppelbindungen enthaltendes Polyethercarbonatpolyol (A-1) mit mindestens einem Radikalstarter (C), bevorzugt mindestens einem Peroxid (C-1)
(iv) Umsetzung des in Schritt (iii) erhaltenen Produkts mit einer Isocyanatkomponente (B-1) enthaltend NCO-Gruppen, optional in Gegenwart eines Katalysators (D).

**12.** Polyurethan-haltiges Elastomer, erhältlich oder erhalten durch ein Verfahren gemäß einem der vorherigen Ansprüche.

**13.** Verwendung des Polyurethan-haltigen Elastomers, gemäß Anspruch 12, wobei das Polyurethan-haltige Elastomer als Kautschuk, Dichtmasse, Dichtungen, Klebstoff, Lack oder als Formkörper beispielsweise für Dämpfer, Dämpferelemente oder Schläuche verwendet wird.

**14.** Zwei-Komponenten-System, umfassend eine Polyolkomponente (A), enthaltend mindestens ein Kohlenstoff-Kohlenstoff Doppelbindungen enthaltendes Polyethercarbonatpolyol (A-1), und eine Isocyanatkomponente (B-1) enthaltend NCO-Gruppen, wobei das molare Verhältnis der NCO-Gruppen der Isocyanatkomponente (B-1), zu den OH-Gruppen der Polyolkomponente (A) größer als 1,0
ist, wobei in Komponente (A) und/oder in Komponente (B-1) mindestens ein Radikalstarter (C), bevorzugt mindestens ein Peroxid (C-1), enthalten ist und wobei die Isocyanatkomponente (B-1) eine durchschnittliche NCO-Funktionalität von 1,5 bis 10 hat.

**Claims**

1. Process for preparing a polyurethane-containing elastomer by reacting a polyol component (A) containing at least one polyethercarbonate polyol (A-1) containing carbon-carbon double bonds with an isocyanate component (B-1) containing NCO groups, in the presence of a free-radical initiator (C), preferably at least one peroxide (C-1), and optionally of a catalyst (D), wherein the molar ratio of the NCO groups of the isocyanate component (B-1) to the OH groups of the polyol component (A) containing carbon-carbon double bonds is greater than 1.0; and wherein the isocyanate component (B-1) has an average NCO functionality of 1.5 to 10.

2. Process according to Claim 1, wherein the free-radical initiator (C) is at least one peroxide (C-1), and which is selected from the group consisting of dibenzoyl peroxide, dilauroyl peroxide, acetylacetone peroxide, cyclohexanone peroxide, methyl ethyl ketone peroxide, methyl isobutyl ketone peroxide, cumene hydroperoxide, tert-butyl hydroperoxide, di(2-tert-butylperoxyisopropyl)-benzene, tert-butyl cumyl peroxide, di-tert-amyl peroxide, di-tert-butyl peroxide, dicumyl peroxide, 2,5-dimethyl-2,5-di-(tert-butylperoxy)hexane, 1,1-di(tert-butylperoxy)-3,3, 5-trimethylcyclohexane, 1,1-di(tert-butylperoxy)cyclohexane, 2,5-dimethyl-2,5-di(2-ethylhexanoylperoxy)hexane, tert-butyl peroxybenzoate, tert-butyl peroxy-3,5,5-trimethylhexanoate, tert-butyl peroxy-2-ethylhexanoate, tert-butyl monoperoxymaleate, di(4-tert-butylcyclohexyl) peroxydicarbonate, tert-butyl peroxy-2-ethylhexylcarbonate, tert-butyl peroxyisopropylcarbonate, 1,3 1,4-bis(tert-butylperoxyisopropyl)benzene, t-butyl cumyl peroxide, 2,5-di(t-butylperoxy)-2,5-dimethylhexane, n-butyl 4,4'-di(t-butylperoxy)valerate, 1,1'-di(tert-butylperoxy)-3,3,5-trimethylcyclohexane, di(2,4-dichlorobenzoyl) peroxide, tert-butyl peroxybenzoate, butyl 4,4-di-(tert-butylperoxy)valerate, 2,5-dimethyl-2,5-di(tert-butylperoxy)hex-3-yne, 2,2'-azodiisobutyronitrile and di-tert-butyl peroxide.

3. Process according to either of the preceding claims, wherein the polyethercarbonate polyol (A-1) containing carbon-carbon double bonds has a content of carbon-carbon double bonds of 0.5% by weight to 17.0% by weight, preferably of 1.0% by weight to 6.0% by weight.

4. Process according to any of the preceding claims, wherein the polyethercarbonate polyol (A-1) containing carbon-carbon double bonds has a $CO_2$ content of 0.5% by weight to 50% by weight, preferably of 5% by weight to 25% by weight.

5. Process according to any of the preceding claims, wherein the polyethercarbonate polyol (A-1) containing carbon-carbon double bonds is obtainable by addition of an alkylene oxide, at least one monomer containing carbon-carbon double bonds and $CO_2$ onto an H-functional starter compound in the presence of a double metal cyanide catalyst.

6. Process according to Claim 5, wherein the monomer containing at least one carbon-carbon double bond is selected from at least one of the monomers from one or more of the groups consisting of

(a) allyl glycidyl ether, vinylcyclohexene oxide, cyclooctadiene monoepoxide, cyclododecatriene monoepoxide, butadiene monoepoxide, isoprene monoepoxide, limonene oxide, 1,4-divinylbenzene monoepoxide, 1,3-divinylbenzene monoepoxide, glycidyl esters of unsaturated fatty acids, partly epoxidized fats and oils and/or mixtures thereof
(b) alkylene oxide with double bond of the general formula (IX):

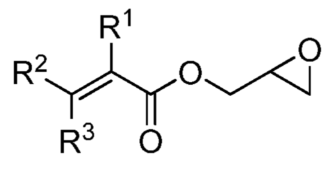
(IX)

where $R_1$ to $R_3$ are independently H, halogen, substituted or unsubstituted C1-C22 alkyl or substituted or unsubstituted C6-C12 aryl

(c) cyclic anhydride conforming to the formula (X), (XI) or (XII):

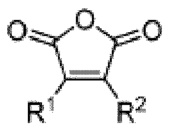

(X)

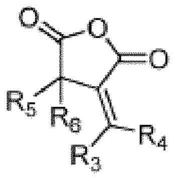

(XI)

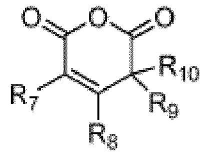

(XII)

where $R_1$ to $R_{10}$ are independently H, halogen, substituted or unsubstituted C1-C22 alkyl or substituted or unsubstituted C6-C12 aryl,

and

(d) 4-cyclohexene-1,2-dioic anhydride, 4-methyl-4-cyclohexene-1,2-dioic anhydride, 5,6-norbornene-2,3-dioic anhydride, allyl-5,6-norbornene-2,3-dioic anhydride, dodecenylsuccinic anhydride, tetradecenylsuccinic anhydride, hexadecenylsuccinic anhydride and octadecenylsuccinic anhydride.

**7.** Process according to Claim 6, wherein the at least one, at least the monomer containing a carbon-carbon double bond is selected from one or more of the groups consisting of

(a) allyl glycidyl ether, vinylcyclohexene oxide and limonene oxide,
(b) glycidyl acrylate and glycidyl methacrylate,
(c) maleic anhydride and itaconic anhydride
and
(d) 4-cyclohexene-1,2-dioic anhydride and 5,6-norbornene-2,3-dioic anhydride.

**8.** Process according to any of the preceding claims, wherein the component (B-1) containing isocyanate groups comprises aliphatic, cycloaliphatic and/or aromatic isocyanates, preferably HDI, MDI, TDI, NDI, the trimerization or higher oligomerization products thereof and/or adducts thereof.

**9.** Process according to any of the preceding claims, comprising the following steps:

i) reacting a polyol component (A) comprising at least one polyethercarbonate polyol (A-1) containing carbon-carbon double bonds with an isocyanate component (B-1) containing NCO groups to give a polyurethane, optionally in the presence of a catalyst (D),

ii) crosslinking the polyurethane obtained in i) in the presence of at least one free-radical initiator (C), preferably at least one peroxide (C-1) .

**10.** Process according to Claim 9, wherein, in step i), at least one catalyst (D) for the reaction of the polyol component (A) with a component (B-1) containing isocyanate groups, which component contains terminal NCO groups, is added.

**11.** Process according to any of Claims 1 to 8, comprising the following steps:

(iii) reacting a polyol component (A) comprising at least one polyethercarbonate polyol (A-1) containing carbon-carbon double bonds with at least one free-radical initiator (C), preferably at least one peroxide (C-1),

(iv) reacting the product obtained in step (iii) with an isocyanate component (B-1) containing NCO groups, optionally in the presence of a catalyst (D) .

**12.** Polyurethane-containing elastomer obtainable or obtained by a process according to any of the preceding claims.

**13.** Use of the polyurethane-containing elastomer according to Claim 12, wherein the polyurethane-containing elastomer is used as rubber, sealing compound, gaskets, adhesive, varnish, or shaped body, for example for dampers, damper elements or hoses.

**14.** Two-component system comprising a polyol component (A) comprising at least one polyethercarbonate polyol (A-1) containing carbon-carbon double bonds and an isocyanate component (B) containing NCO groups, wherein the molar ratio of the NCO groups of the isocyanate component (B-1) to the OH groups of the polyol component (A) is greater than 1.0,
wherein at least one free-radical initiator (C), preferably at least one peroxide (C-1), is present in component (A) and/or component (B-1), and wherein the isocyanate component (B-1) has an average NCO functionality of 1.5 to 10.

**Revendications**

1. Procédé pour la préparation d'un élastomère contenant un polyuréthane par transformation d'un composant de type polyol (A), contenant au moins un polyéthercarbonatepolyol (A-1) contenant des doubles liaisons carbone-carbone, avec un composant de type isocyanate (B-1) contenant des groupes NCO, en présence d'un initiateur de radicaux (C), préférablement au moins un peroxyde (C-1), et éventuellement d'un catalyseur (D), le rapport molaire des groupes NCO du composant de type isocyanate (B-1) sur les groupes OH du composant de type polyol (A) contenant des doubles liaisons carbone-carbone étant supérieur à 1,0 ; et le composant de type isocyanate (B-1) possédant une fonctionnalité moyenne de NCO de 1,5 à 10.

2. Procédé selon la revendication 1, l'initiateur de radicaux (C) étant au moins un peroxyde (C-1), et qui est choisi dans le groupe constitué par le peroxyde de dibenzoyle, le peroxyde de dilauroyle, le peroxyde d'acétylacétone, le peroxyde de cyclohexanone, le peroxyde de méthyléthylcétone, le peroxyde de méthylisobutylcétone, l'hydroperoxyde de cumène, l'hydroperoxyde de tert.-butyle, le di(2-tert.-butyl-peroxyisopropyl)benzène, le peroxyde de tert.-butylcumyle, le peroxyde de di-tert.-amyle, le peroxyde de di-tert.-butyle, le peroxyde de dicumyle, le 2,5-diméthyl-2,5-di-(tert.-butylperoxy)-hexane, le 1,1-di-(tert.-butylperoxy)-3,3,5-triméthylcyclohexane, le 1,1-di-(tert.-butylperoxy)-cyclohexane, le 2,5-diméthyl-2,5-di(2-éthylhexanoylperoxy)-hexane, le tert.-butyl-peroxy-benzoate, le tert.-butylperoxy-3,5,5-triméthylhexanoate, le tert.-butylperoxy-2-éthylhexanoate, le tert.-butylmonoperoxymaléate, le di-(4-tert.-butyl-cyclohexyl)-peroxydicarbonate, le tert.-butylperoxy-2-éthylhexylcarbonate, le tert.-butylperoxyisopropylcarbonate, le 1,3 1,4-bis(tert-butylperoxyisopropyl)benzène, le peroxyde de t-butyle et de cumyle, le 2,5-di(t-butylperoxy)-2,5-diméthylhexane, le n-butyl-4,4'-di(t-butylperoxy)valérate, le 1,1'-di-(tert-butylperoxy)-3,3,5-triméthylcyclohexane, le di-(2,4-dichlorobenzoyl)-peroxyde, le tert.-butylperoxybenzoate, le butyl-4,4-di-(tert.-butylperoxy)valérate, le 2,5-diméthyl-2,5-di(tert.-butylperoxy)hex-3-yne, le 2,2'-azodiisobutyronitrile et le peroxyde de di-tert-butyle.

3. Procédé selon l'une quelconque des revendications précédentes, le polyéthercarbonatepolyol (A-1) contenant des doubles liaisons carbone-carbone présentant une teneur en doubles liaisons carbone-carbone de 0,5 % en poids à 17,0 % en poids, préférablement de 1,0 % en poids à 6,0 % en poids.

4. Procédé selon l'une quelconque des revendications précédentes, le polyéthercarbonatepolyol (A-1) contenant des doubles liaisons carbone-carbone présentant une proportion en $CO_2$ de 0,5 % en poids à 50 % en poids, préférablement de 5 % en poids à 25 % en poids.

5. Procédé selon l'une quelconque des revendications précédentes, le polyéthercarbonatepolyol (A-1) contenant des doubles liaisons carbone-carbone pouvant être obtenu par addition d'un oxyde d'alkylène, d'au moins un monomère contenant des doubles liaisons carbone-carbone et de $CO_2$ sur un composé de départ fonctionnalisé par H en présence d'un catalyseur de type cyanure métallique double.

6. Procédé selon la revendication 5, l'au moins un, au moins le monomère contenant des doubles liaisons carbone-carbone étant choisi parmi au moins l'un des monomères parmi un ou plusieurs des groupes constitués par

(a) l'éther d'allyle et de glycidyle, l'oxyde de vinylcyclohexène, le monoépoxyde de cyclooctadiène, le monoépoxyde de cyclododécatriène, le monoépoxyde de butadiène, le monoépoxyde d'isoprène, l'oxyde de limonène, le monoépoxyde de 1,4-divinylbenzène, le monoépoxyde de 1,3-divinylbenzène, des esters de glycidyle d'acides gras insaturés, des graisses et des huiles partiellement époxydées et/ou leurs mélanges
(b) un oxyde d'alkylène doté d'une double liaison de formule générale (IX) qui est :

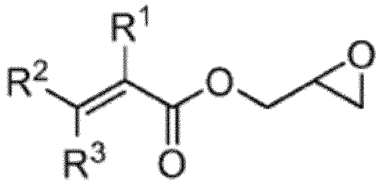

(IX)

$R_1$ à $R_3$ étant indépendamment les uns des autres H, halogène, C1-C22-alkyle substitué ou non substitué, C6-C12 aryle substitué ou non substitué

(c) un anhydride cyclique correspondant à la formule (X), (XI) ou (XII) :

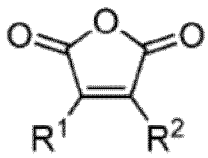

(X)

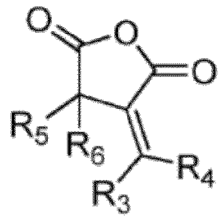

(XI)

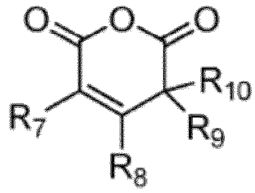

,

(XII)

$R_1$ à $R_{10}$ étant indépendamment les uns des autres H, halogène, C1-C22-alkyle substitué ou non substitué, C6-C12 aryle substitué ou non substitué,

et

(d) l'anhydride de l'acide 4-cyclohexène-1,2-dicarboxylique, l'anhydride de l'acide 4-méthyl-4-cyclohexène-1,2-dicarboxylique, l'anhydride de l'acide 5,6-norbornène-2,3-dicarboxylique, l'anhydride de l'acide allyl-5,6-norbornène-2,3-dicarboxylique, l'anhydride de l'acide dodécénylsuccinique, l'anhydride de l'acide tétradécénylsuccinique, l'anhydride de l'acide hexadécénylsuccinique et l'anhydride de l'acide octadécénylsuccinique.

**7.** Procédé selon la revendication 6, l'au moins un monomère contenant des doubles liaisons carbone-carbone étant choisi parmi un ou plusieurs des groupes constitués par

(a) l'ester d'allyle et de glycidyle, l'oxyde de vinylcyclohexène et l'oxyde de limonène

(b) l'acrylate de glycidyle et le méthacrylate de glycidyle,

(c) l'anhydride de l'acide maléique et l'anhydride de l'acide itaconique

et

(d) l'anhydride de l'acide 4-cyclohexène-1,2-dicarboxylique et l'anhydride de l'acide 5,6-norbornène-2,3-dicarboxylique.

**8.** Procédé selon l'une quelconque des revendications précédentes, le composant contenant des groupes isocyanate (B-1) contenant des isocyanates aliphatiques, cycloaliphatiques et/ou aromatiques, préférablement l'HDI, le MDI, le TDI, le NDI, leurs produits de trimérisation ou leurs produits d'oligomérisation supérieure et/ou leurs adduits.

**9.** Procédé selon l'une quelconque des revendications précédentes, comprenant les étapes suivantes :

i) transformation d'un composant de type polyol (A), contenant au moins un polyéthercarbonatepolyol (A-1) contenant des doubles liaisons carbone-carbone avec un composant de type isocyanate (B-1) contenant des groupes NCO, pour donner un polyuréthane, éventuellement en présence d'un catalyseur (D),

ii) réticulation du polyuréthane obtenu en i) en présence d'au moins un initiateur de radicaux (C), préférablement d'au moins un peroxyde (C-1) .

**10.** Procédé selon la revendication 9, dans lequel dans l'étape i) au moins un catalyseur (D) est ajouté pour la réaction du composant de type polyol (A) avec un composant contenant des groupes isocyanate (B-1) contenant des groupes NCO terminaux.

**11.** Procédé selon l'une quelconque des revendications 1 à 8, comprenant les étapes suivantes :

(iii) transformation d'un composant de type polyol (A), contenant au moins un polyéthercarbonatepolyol (A-1) contenant des doubles liaisons carbone-carbone avec au moins un initiateur de radicaux (C), préférablement au moins un peroxyde (C-1)
(iv) transformation du produit obtenu dans l'étape (iii) avec un composant de type isocyanate (B-1) contenant des groupes NCO, éventuellement en présence d'un catalyseur (D) .

**12.** Élastomère contenant un polyuréthane, qui peut être obtenu ou est obtenu par un procédé selon l'une quelconque des revendications précédentes.

**13.** Utilisation de l'élastomère contenant un polyuréthane, selon la revendication 12, l'élastomère contenant un polyuréthane étant utilisé en tant que caoutchouc, masse d'étanchéité, joints d'étanchéité, adhésif, laque ou en tant que corps moulé par exemple pour des amortisseurs, des éléments amortisseurs ou des tubes.

**14.** Système à deux composants, comprenant un composant de type polyol (A), contenant au moins un polyéthercarbonatepolyol (A-1) contenant des doubles liaisons carbone-carbone, et un composant de type isocyanate (B-1) contenant des groupes NCO, le rapport molaire des groupes NCO du composant de type isocyanate (B-1) sur les groupes OH du composant de type polyol (A) étant supérieur à 1,0, dans lequel dans le composant (A) et/ou dans le composant (B-1), au moins un initiateur de radicaux (C), préférablement au moins un peroxyde (C-1) est contenu et le composant de type isocyanate (B-1) possédant une fonctionnalité moyenne de NCO de 1,5 à 10.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2845872 A1
- WO 2014060329 A1
- WO 2015032645 A1
- WO 2015032737 A1
- WO 2015000903 A1
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A
- EP 1359177 A
- EP 176013 A0
- WO 200180994 A1


### In der Beschreibung aufgeführte Nicht-Patentliteratur


- **INOUE et al.** Copolymerization of Carbon Dioxide and Epoxide with Organometallic Compounds. *Die Makromolekulare Chemie,* 1969, vol. 130, 210-220
- *Chemical Communications,* 2011, vol. 47, 141-163
- Kunststoff-Handbuch. Carl-Hanser-Verlag, 1966, vol. VII, 96-102
- **HENRI ULRICH.** Chemistry and Technology of Isocyanates. John Wiley & Sons, 1996, 98ff